# EUROPEAN PATENT SPECIFICATION

(11) **EP 0 592 104 B1**
(45) Date of publication and mention of the grant of the patent: **09.01.2002**
(21) Application number: 93307000.5
(22) Date of filing: 06.09.1993
(51) Int. Cl.: H04B 1/66, G10L 13/02

(54) **Coding and decoding of digital signals**
Kodierung und Dekodierung digitaler Signale
Codage et décodage de signaux numériques

(30) Priority: 11.09.1992 JP 24357592
(43) Date of publication of application: 13.04.1994
(73) Proprietor: SONY CORPORATION, Tokyo (JP)
(72) Inventor: Shimoyoshi, Osamu, c/o Intellectual Property Div., Shinagawa-ku, Tokyo 141 (JP); Akagiri, Kenzo, c/o Intellectual Property Div., Shinagawa-ku, Tokyo 141 (JP); Abe, Miki, c/o Intellectual Property Div., Shinagawa-ku, Tokyo 141 (JP); Watanabe, Takahiro, c/o Intellectual Property Div., Shinagawa-ku, Tokyo 141 (JP)
(74) Representative: Cotter, Ivan John

(56) References cited:
- EP-A- 0 473 367
- SIGNAL PROCESSING VI, THEORIES AND APPLICATIONS, vol.II, August 1992, AMSTERDAM NL pages 949 - 952, XP000348534 RENARD 'A study of the filter roundoff noise in subband coding systems'

## Description

This invention relates to the coding and decoding of digital signals. More particularly, but not exclusively, the invention relates to efficient coding apparatus and efficient decoding apparatus for carrying out coding of input digital data by means of so-called efficient coding to transmit, record, reproduce or decode it, thus to provide a reproduced signal, such apparatus preferably being implemented in the form of a digital signal coding/decoding apparatus, a digital signal coding apparatus, and a digital signal decoding apparatus operative to perform so-called block floating processing of a digital signal.

EP-A-0 473 367 discloses a digital signal encoder comprising an apparatus for coding a digital input signal to provide a coded signal, the apparatus comprising: non-block frequency analysis means for carrying out a frequency analysis of the digital input signal to provide a frequency range signal in each of plural frequency ranges; block frequency analysis means for carrying out a block frequency analysis of the frequency range signals provided by the non-block frequency analysis means; and means for quantizing the block frequency analysed signals produced by the block frequency analysis means.

It is known to use so-called efficient coding technology to orthogonally transform an audio signal, etc., to divide the orthogonally transformed output into blocks every plural words, to carry out floating processing every respective block to implement quantization thereto, and to record on a medium, or transmit thereto, floating information and quantization information along with a quantized output. In this case, the above-mentioned block floating technique basically comprises multiplying respective words within the block by a value common thereto so that they have larger values, thereof to improve the accuracy at the time of quantization. By way of an actual example, one block floating technique searches for the maximum one of absolute values (i.e. maximum absolute value) of respective words within the block to implement floating processing to all words within the block by using a floating coefficient common thereto so that the maximum absolute value is not saturated. In a simpler block floating technique, 6dB is used as a unit utilizing bit shift.

In conventional orthogonal transform processing, not using the block floating technique, a sufficient accuracy is ensured even at the time of any input, and an operation word length is made sufficiently long that the word length accuracy of a signal inputted to an orthogonal transform circuit is not damaged by the orthogonal transform processing. Further, an approach is employed to allow the block size for the orthogonal transform processing to be variable depending upon the property in point of time of a signal, thus to improve the analysis accuracy. There are instances where, as an index for judgment therefor, root mean square values of differences between adjacent samples of a signal are used.

In such orthogonal transform processing, in order to perform an operation while maintaining the accuracy of an input, the operation word length becomes longer. For this reason, the scale of the hardware becomes large, resulting in great difficulty from an economical point of view. Further, in the case where the block size for the orthogonal transform processing is caused to be variable, newly determining a judgment index therefor only for this purpose results in an increase in the number of operational steps.

Further, in order to search for the above-described maximum absolute value in the above-mentioned block floating processing, a procedure is required to judge whether or not the absolute value of the present (current) word is larger than the maximum absolute value of past words with respect to all words within one block. As a result, the number of steps in the processing program becomes large and it takes much time.

In view of the facts as described above, there has been proposed a technology to divide an audio signal, etc. into signals (signal components) in frequency bands by using filters, to divide filter outputs into blocks every plural words, to carry out first block floating every respective block to implement an orthogonal transform processing thereto, to further divide its orthogonally transformed output into blocks every plural lesser words to carry out a second block floating processing for every such respective block, and to implement quantization thereto to thereby prevent degradation in the operational accuracy at the time of the orthogonal transform operation. In a decoding circuit corresponding to the above, after the second block floating is released with respect to a coded output, an inverse orthogonal transform processing is carried out to release the first block floating after the inverse orthogonal transform processing is completed to synthesize outputs in respective bands by using filters.

Since the magnitude of the first block floating is determined by taking the maximum value of words or absolute values of all words within a block subjected to block floating, in a frequency band where signal components of respective filter outputs take a larger value, it is more difficult for the effect of the block floating to occur, so the quantity of operation errors generated becomes large. Namely, since an audio signal generally tends to have a spectrum such that the signal component on a lower frequency side is large and the signal component on a higher frequency side is small, there are many instances where noise on the lower frequency side is greater than that on the higher frequency side.

However, when the hearing sense characteristic is taken into account, the sensitivity on the lower frequency side is higher than that on the higher frequency side. For this reason, there are instances where a great quantity of noise on the lower frequency side may constitute an obstacle from the viewpoint of the hearing sense. While there are instances where noise generated on the lower frequency band side may not be heard due to the masking effect of the hearing sense, such effect cannot be expected with respect to all audio signals.

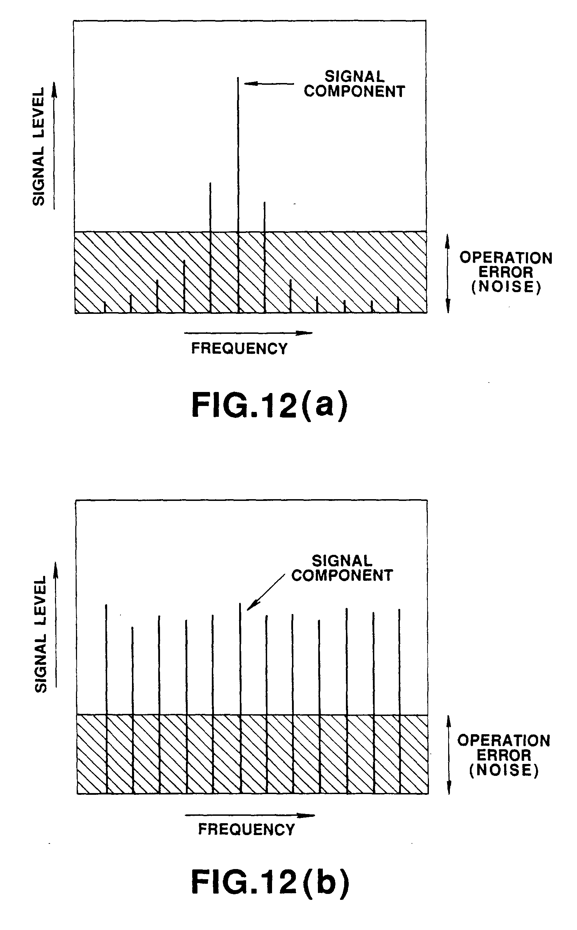

For example, in the case of two signals as shown at (a) and (b) in Fig. 12 of the accompanying drawings, if the maximum signal levels of both signals are the same, the quantities of noise caused by operation errors are the same, but the masking effect makes it difficult to hear the noise in the case of the signal indicated at (b) in Fig. 12. Further, if an attempt is made to elongate the operation word length or to carry out an operation of double precision, etc. for the purpose of suppressing occurrence of operation errors, an increase in the scale of the hardware results.

According to one aspect of the present invention, there is provided an apparatus for coding a digital input signal to provide a coded signal, the apparatus comprising: non-block frequency analysis means for carrying out a frequency analysis of the digital input signal to provide a frequency range signal in each of plural frequency ranges; block frequency analysis means for carrying out a block frequency analysis of the frequency range signals provided by the non-block frequency analysis means; and means for quantizing the block frequency analysed signals produced by the block frequency analysis means; characterised in that the block frequency analysis ans additionally comprises: scale-down means is operable is carry out an adaptively controlled scale down operation on the values in the block frequency analysis in a lower frequency one of the frequency ranges and to carry out a fixed scale down operation on the values in the block frequency analysis in a higher frequency one of the frequency ranges.

According to another aspect of the present invention, there is provided apparatus for decoding a coded signal wherein the coded signal is decoded to provide a digital output signal, the coded signal being obtained by conducting a non-block frequency analysis of a digital input signal to provide a frequency range signal in each of plural frequency ranges, dividing each frequency range signal into blocks and carrying out, on every block of the frequency range signal in each of the frequency ranges, a block frequency analysis to provide frequency analysed signals, and quantizing the block frequency analysed signals to provide a block of the coded signal, the apparatus comprising: inverse quantizing means for dequantizing the quantized block frequency analysed signals, block frequency synthesis means for performing a block frequency synthesis to transform, from the frequency domain to the time domain dequantized block frequency analysed signals in each of the frequency ranges in each block of the coded signal, the block frequency synthesis means providing, in each of the frequency ranges, a block of reproduced frequency range signal; and non-block frequency synthesis means for performing a frequency synthesis of the reproduced frequency range signals from the non-block frequency synthesis means to provide the digital output signal, characterised in that the block frequency synthesis means additionally comprises: scale-down means wherein the scale down means is operable to carry out an adaptively controlled scale down operation on the values in the block frequency synthesis in a lower frequency are of the frequency ranges and to carry out a fixed scale down operation on the values in the block frequency synthesis in a higher frequency one of the frequency ranges.

In the process (e.g. orthogonal transform operation) at the block frequency analysis means or in the process (e.g. inverse orthogonal transform operation) at the block frequency synthesis means corresponding to outputs in respective frequency bands of the non-block frequency analysis means or the non-block frequency synthesis means, scale down operation is carried out. Such scale down operation can be adaptively determined by judgment of values in the process of the (e.g.) orthogonal transform operation. Such scale down operation may be adaptively determined also in consideration of a judgment of the magnitude of tonality.

Further, in the (e.g.) orthogonal transform processing at the block frequency analysis means or the (e.g.) inverse orthogonal transform processing at the block frequency synthesis means corresponding to outputs in respective frequency bands of the non-block frequency analysis means or the non-block frequency synthesis means, block floating may be carried out. Further, in the process of the (e.g.) orthogonal transform operation, the above-mentioned block floating may be released. The block floating may be released by repeatedly carrying out scale down operations in the process of the (e.g.) orthogonal transform operation. In addition, the number of scale down operations may be caused to correspond with the magnitude of the block floating. By carrying out such scale down operation, an overflow is prevented.

A digital signal coding apparatus according to an embodiment of the invention may be constructed to divide an output on a lower frequency band side of a first filter, which divides the entire frequency bands into two frequency bands, into two frequency bands by using a second filter to implement first block floating processing to respective outputs in three frequency bands in total to implement an orthogonal transform processing, which adaptively carries out scale down operations by values in the process of operations, to at least one filter output on the lower frequency band side, and to implement an orthogonal transform processing, which carries out a fixed scale down operation, to a filter output on the higher frequency band side to implement a second block floating processing having a block size smaller than that of the first block floating processing to orthogonally transformed outputs relating to the entire filter outputs thereafter to implement quantization thereto.

In correspondence with the above, a digital signal decoding apparatus according to a further embodiment of the invention may be constructed to release the second block floating applied to a coded signal from the above-mentioned digital signal coding apparatus to carry out an inverse orthogonal transform processing, which adaptively controls the scale down operation by values in the process of operation, to at least one filter output on the lower frequency band side, and to implement an inverse orthogonal transform processing, which carries out a fixed scale down, to a filter output on the higher frequency band side to synthesize respective orthogonally transformed outputs by using two filters.

It is to be noted that, in the above digital signal coding apparatus and digital signal decoding apparatus, the orthogonal transform processing may be a Modified Discrete Cosine Transform processing, and the inverse orthogonal transform processing may be an Inverse Modified Discrete Cosine Transform processing. In addition, the block sizes for the orthogonal transform processing and the inverse orthogonal transform processing may be variable.

According to a preferred form of implementation of digital signal coding/decoding apparatus according to this invention, an input signal is divided into signals (signal components) in plural frequency bands by non-block frequency analysis such as filtering, etc. thereafter to allow, with respect to respective divided frequency bands, noises based on degradation of the operation accuracy resulting from respective orthogonal transform processing to correspond with noise levels required in respective frequency bands from a viewpoint of the hearing sense phenomenon such as masking or equi-loudness characteristic, etc. As means for realizing this, a processing for preventing degradation of the operation accuracy is added at least in a lower frequency band so as substantially to become in conformity with the equi-loudness characteristic, thus to lower noise resulting from an operation error.

To implement the means for preventing degradation in the operation accuracy, the following approach may be employed. The approach comprises adaptively determining a scale down operation combined with block floating by judgment of values in the process of the orthogonal transform operation, and adaptively carrying out such scale down operation so as to include judgment of the magnitude of tonality of an input signal. By employing such an approach, the number of scale down operations which constitutes one cause of the operation accuracy degradation is reduced to a minimum value, and scale down operation is optimally controlled so as not to cause an overflow, thereby making it possible to reduce a noise quantity resulting from an operation error to the level where the masking effect is produced.

In addition, in the above-mentioned orthogonal transform processing or the inverse orthogonal transform processing corresponding to at least one filter output on a higher frequency side, adaptive scale down operation may be omitted thus to reduce the quantity of operations, thereby contemplating solving the above-mentioned problems.

Since the operation accuracies of the above-mentioned orthogonal transform and inverse transform can be reduced to a reasonable degree from the viewpoints of the entirety of efficient coding/decoding and the hearing sense characteristic, reduction in the scale of the hardware and reduction in the quantity of operations can be attained.

Embodiments of the invention described below provide a digital signal coding/decoding apparatus, a digital signal coding apparatus, and a digital signal decoding apparatus, which are capable of carrying out orthogonal transform operation processing and inverse orthogonal transform operation processing used in efficient coding and efficient decoding with a smaller scale of hardware and a lesser quantity of operations.

The invention will now be further described, by way of illustrative and non-limiting example, with reference to the accompanying drawings, in which:

Fig. 1 is a circuit diagram showing, in block form, a digital signal coding apparatus which is an embodiment of this invention.

Fig. 2 is a circuit diagram showing, in block form, an actual circuit configuration for carrying out a block floating operation in the apparatus shown in Fig. 1.

Fig. 3 is a flowchart for realizing, by software, the block floating operation of the circuit configuration shown in Fig. 2.

Fig. 4 is a view showing an actual example of division into blocks for every one of respective divided frequency bands which extend in a frequency base direction and in a time base direction as used in the apparatus shown in Fig. 1.

Fig. 5 is a circuit diagram showing, in block form, an actual example of an allowed noise calculation circuit (127) of the apparatus shown in Fig. 1.

Fig. 6 is a view showing a bark spectrum.

Fig. 7 is a view showing a masking spectrum.

Fig. 8 is a view obtained by synthesising a minimum audible curve and a masking spectrum.

Fig. 9 is a circuit diagram showing, in block form, a digital signal decoding apparatus which is an embodiment of this invention.

Fig. 10 is a circuit diagram showing, in block form, the internal configuration of an IMDCT-H circuit and an IMDCT-M circuit shown in Fig. 9 in more detail.

Fig. 11 is a circuit diagram showing, in block form, the internal configuration of an IMDCT-L circuit of Fig. 9 in more detail.

Fig. 12 is a view showing, on the frequency base, the relationship between signal components and operation error noise.

Preferred embodiments of this invention will now be described with reference to the accompanying drawings.

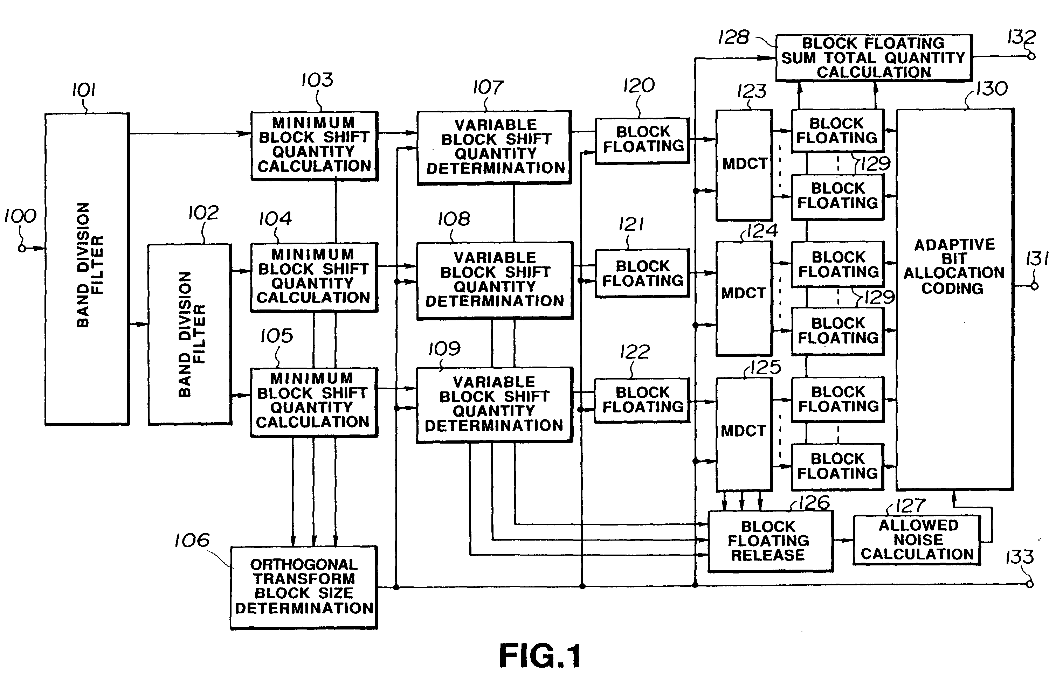

As shown in Fig. 1, a digital signal coding/decoding apparatus according to an embodiment of the invention is constructed to carry out frequency analysis of outputs of band division filters 101, 102 acting as non-block frequency analysis means which carry out frequency analysis of an input digital signal without division into blocks. MDCT circuits 123, 124, 125 perform a block frequency analysis by an orthogonal transform processing (e.g. Modified Discrete Cosine Transform; MDCT) every block to quantize frequency analysis outputs by the MDCT circuits 123, 124, 125 to thereby provide a coded signal for recording or transmission.

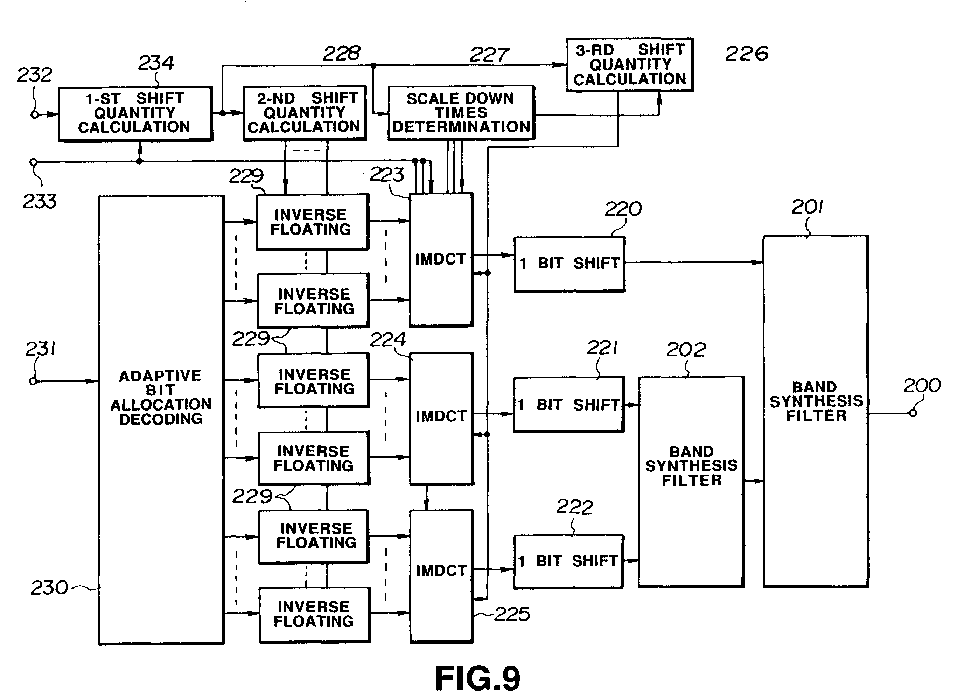

Thereafter, the coded signal, which is a frequency domain signal is decoded to a time domain signal by the decoder of Figure 9. The decoder uses an IMDCT-H circuit 223, an IMDCT-M circuit 224, and an IMDCT-L circuit 225 as block frequency synthesis means. The circuits 223, 224, 225 carry out frequency synthesis by inverse orthogonal transform processing (e.g., IMDCT) every block, at the time of reproduction or reception to conduct frequency synthesis of those signals on the time base, without division into blocks. Band synthesis filters 202, 201 perform non-block frequency synthesis on the time domain signals.

The digital signal coding/decoding apparatus of this embodiment, modifies noise levels resulting from the operation round-down in conformity with the hearing sense characteristics such as so called masking effect or equi-loudness characteristic, etc. as described later. Further, noise levels resulting from round-down operations in a frequency band, particularly in a low frequency band or low and medium frequency bands where the dynamic range is required to be large from a viewpoint of the hearing sense characteristics are reduced. The MDCT operation or the IMDCT operation is simplified in a frequency band where the sense of hearing is relative insensitive, particularly on a higher frequency side where a large dynamic range is not required from a viewpoint of the hearing sense. That enables the scale of hardware to be reduced.

Furthermore, the digital signal coding/decoding apparatus of this embodiment is adapted to implement scale down operation in the process of MDCT operations in the MDCT circuits 123, 124, 125 or in the process of IMDCT operations in the IMDCT-H circuit 223, the IMDCT-M circuit 224, the IMDCT-L circuit 225 corresponding to outputs in respective frequency bands of the band division filters 101, 102 or band synthesis filters 202, 201. The apparatus adaptively determines the number of scale down operations by judgement of values in the process of the MDCT operation. This scale down operation is adaptively determined so as to include judgement of the magnitude of tonality of an input signal.

Further, the digital signal coding/decoding apparatus of this embodiment is adapted to carry out block floating in the MDCT operations at the MDCT circuits 123, 124, 125 and the IMDCT operations at the IMDCT-H circuit 223, IMDCT-M circuit 224, IMDCT-L circuit 225 corresponding to outputs in respective frequency bands of the band division filters 101, 102 or band synthesis filters 202, 201, and to release that block floating in the process of MDCT operation. For example, the block floating is released by repeatedly carrying out scale down operations in the processor MDCT operation. It is to be noted that the number of scale down operations is caused to be in correspondence with the magnitude of the block floating. By carrying out the scale down operation in this way, an overflow is prevented. At the same time, adaptive scale down operation is not carried out in the MDCT operations at the MDCT circuits 123, 124, 125 or the IMDCT operations at the MDCT-H circuit 223, the IMDCT-M circuit 224, IMDCT-L circuit 225 corresponding to at least one filter output on the higher frequency side of the band divisional filter or the band synthesis filter. In contrast adaptive scale down operation is carried out only in the MDCT operations at the MDCT circuits 123, 124, 125 and IMDCT operations as IMDCT-H circuit 223, IMDCT-M circuit 224, IMDCT-L circuit 225 corresponding to outputs on the lower frequency side of the band division filters 101, 102 or band synthesis filters 201, 202.

In the digital signal coding apparatus of this embodiment, as shown in Fig. 1 a first band division filter 101 divides the entire frequency bands into two frequency bands. The lower frequency band output of the first band division filter 101, is divided into two further frequency bands by using a second band division filter 102. First block floating circuits 120, 121, 122, carry out first block floating processing on the three frequency bands. Then, at MDCT circuits 123, 124, 125, MDCT operations, which adaptively carry out scale down operations, are implemented on at least one filter output on the lower frequency side. An MDCT operation, which carries out a fixed scale down operation, is implemented on a filter output on the higher frequency band side.

Thereafter, a second block floating having a block size smaller than that of the first block floating processing, is implemented by second block floating circuits 129 on the outputs of all the MDCT circuits 123, 124, 125. Thereafter the outputs of the second block floating circuits are quantized in an adaptive coding circuit.

In correspondence with the above, the digital signal decoding apparatus of this embodiment is constructed as follows. Namely, as shown in Fig. 9, an adaptive decoding circuit 230 applies decoded signals to inverse floating circuits 229. The second block floating of the coded signal from the above-mentioned digital signal coding apparatus of Fig. 1 is released by using the inverse floating circuits 229. Then, an IMDCT-L circuit 225, implements an IMDCT process on the low frequency range. The IMDCT-L circuit 225 adaptively controls the scale down operation in accordance with signal values in the lower frequency range. Further, IMDCT-M circuit 224 and IMDCT-H circuit 223, implement IMDCT processes on the higher frequency range. A fixed scale down is implemented by the circuits 223 and 224. Two band synthesis filters 202, 201 synthesise the IMDCT outputs.

It is to be noted that the block sizes for the MDCT operation and the IMDCT operation in this embodiment are variable as will be described below.

Here, in this embodiment, for convenience of explanation, the digital signal coding/decoding apparatus will now be described separately as a digital signal coding apparatus and a digital signal decoding apparatus.

By taking into consideration the flow of the following description, prior to the description of the digital signal decoding apparatus of the embodiment of this invention, a digital signal coding apparatus (efficient coding apparatus) will be first described. The digital signal decoding apparatus of this embodiment will be described following the description of the above-mentioned efficient coding apparatus.

The technology for implementing efficient coding to a digital signal by using the technique of the adaptive transform coding (ATC), the technique in which the sideband coding (SBC) and the adaptive transform coding (ATC) are combined, and the technique of the adaptive bit allocation (APC-AB) will now be described with reference to Fig. 1 and figures subsequent thereto.

In an actual efficient coding apparatus shown in Fig. 1, such an approach is employed to: (a) divide an input digital signal into signals (signal components) in a plurality of frequency bands by using filters, etc., and to make a selection such that according as the frequency shifts to a higher frequency band, the band width is caused to be broad; (b) carry out orthoqonal transform processing every respective frequency bands; and (c) adaptively bit-allocate spectrum data on the frequency base thus obtained every so called critical bands in which the hearing sense characteristic is taken into consideration (which will be described later), or every plural bands obtained by further dividing the critical band in a higher frequency band to encode them. The widths of frequency bands divided by using filters may be equal to each other. In the embodiment of this invention, the orthogonal transform block size (block length) is adaptively varied in dependency upon an input signal before the orthogonal transform processing, and block floating processing is carried out on every block.

In Fig. 1, an input terminal 100 is supplied with, e.g., an audio PCM signal of 0-20 kHz. This input signal is divided into signals (signal components) in the frequency band of 0-10 kHz and the frequency band of 10k-20 kHz by using a band division filter 101, e.g., so called a QMF filter, etc., and the signal in the frequency band of 0-10 kHz is further divided into a signal in the frequency band of 0-5 kHz and a signal in the frequency band of 5k-10 kHz by using a division filter 102 such as so called a QMF filter, etc in a manner similar to the above. As the above-described filter, there is, e.g., a QMF filter, which is described in R.E. Crochiere, Digital coding of speech in subbands, Bell Syst. Tech. J. Vol. 55, No. 8, 1976. Further, a band division technique by equal band width filters is described in ICASSP 83, BOSTON, Polyphase Quadrature filters-A new subband coding technique, Joseph H. Rothweiler.

The signal in the frequency band of 10k ~ 20 kHz from the band division filter 101 first undergoes a processing such that the absolute values of samples are taken at blocks every 2.5 ms. The absolute values thus obtained are processed at a minimum block shift quantity calculation circuit 103 for obtaining (calculating) logical sums thereof. Then, an orthogonal transform block size determined at an orthogonal transform block size determination circuit 106 is used to calculate a shift quantity at that size by a variable block shift quantity determination circuit 107. To realize this, outputs of the minimum block shift quantity calculation circuit 103 every 2.5 ms are compared with each other at the determined orthogonal transform block size to select the minimum output. By using an output thus obtained from the variable block shift quantity determination circuit 107, a first block floating circuit 120 implements block floating to an output (the signal in the frequency band of 10k ~ 20kHz) from the band division filter 101. The output which has been subjected to block floating at the first block floating circuit 120 is sent to a Modified Discrete Cosine Transform (MDCT) circuit 123 which is an example of the orthogonal transform circuit, at which such output is subjected to MDCT processing.

Similarly, the signal in the frequency band of 5k ~ 10 kHz from the band division filter 102 first undergoes a processing such that the absolute values of samples are taken at blocks every 2.5 ms. The absolute values thus obtained are processed at a minimum block shift quantity calculation circuit 104 for obtaining (calculating) logical sum thereof. Then, an orthogonal transform block size determined at the orthogonal transform block size determination circuit 106 is used to calculate a shift quantity at that size by a variable block shift quantity determination circuit 108. To realize this, outputs of the minimum block shift quantity calculation circuit 104 every 2.5 ms are compared with each other at the determined orthogonal transform block size to select the minimum output. By using an output thus obtained from the variable block shift quantity determination circuit 108, a first block floating circuit 121 implements block floating to an output (the signal in the frequency band of 5k ∼ 10kHz) from the band division filter 102. The output thus processed is sent to a MDCT circuit 124, at which such output is subjected to MDCT processing.

In addition, similarly, the signal in the frequency band of 0 ∼ 5 kHz from the band division filter 102 undergoes a processing such that the absolute values of samples are taken at blocks every 2.5 ms. The absolute values thus obtained are processed at a minimum block shift quantity calculation circuit 105 for obtaining (calculating) logical sums thereof. Then, a shift quantity at an orthogonal transform block size determined by the orthogonal transform block size determination circuit 106 is used to calculate a shift quantity at that size by a variable block shift quantity determination circuit 109. To realize this, outputs of the minimum block shift quantity calculation circuit 105 every 2.5 ms are compared with each other at the orthogonal transform block size to select the minimum output. By using an output thus obtained from the variable block shift quantity determination circuit 109, a first block floating circuit 122 implements block floating to an output (the signal in the frequency band of 0 ~ 5kHz) from the band division filter 102. The output thus processed is sent to a MDCT circuit 125, at which such output is subjected to MDCT processing.

The above-mentioned MDCT (Modified Discrete Cosine Transform) is described in, e.g., ICASSP 1987 Subband/Transform Coding Using Filter Bank Designs Based on Time Domain Aliasing Cancellation, J.P. Princen, A.B. Bradley, Univ. of Surrey Royal Melbourne Inst. of Tech.

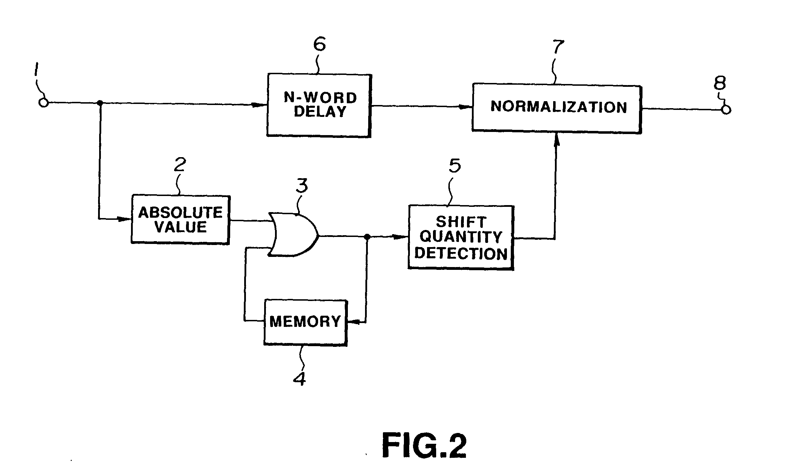

The block floating operation will now be described with reference to Fig. 2. An input terminal 1 is supplied with each of digital signals outputted from filters 101, 102 of Fig. 1. This digital signal is sent to an absolute value calculation circuit 2, at which absolute values of respective words are calculated. The absolute values thus calculated are sent to a logical sum (OR) circuit 3 for determining floating coefficients. The logical sum output data from the OR circuit 3 is sent to a memory 4 for storing one word as a latch or register. The output data from the memory 4 is fed back to the OR circuit 3, at which an operation for logical sum of that output data and an absolute value of a present word from the absolute value calculation circuit 2 is performed. Namely, logical sum of a logical sum operation output from the OR circuit 3 and a present word, which has been delayed by one word at the memory 4 and inputted to the OR circuit 3, is taken, whereby logical sums of respective words are to be accumulatively taken in sequence. The memory 4 is reset (cleared to zero) every time data of N words of one block is inputted. As a result, logical sums of the entirety of respective absolute values of N words of one block are to be performed.

Logical sum output data from the OR circuit 3 is sent to a shift quantity detecting circuit 5. This shift quantity detecting circuit 5 detects the number of digits until "1" appears for the first time when respective bits are viewed from the Most Significant Bit (MSB) to the lower order, or a shift quantity immediately before "1" appears for the first time at the Most Significant Bits (MSB) when logical sum output data is left-shifted. Namely, for values of respective digits of a logical sum output of absolute values of respective words within one block, the values of the digits where "1" is set in any word take "1" and only the values of the digits where "0" is set in each word take "0". For this reason, the digit where "0"s are set in succession from the MSB of the logical sum output indicates "0" in each word. This implies that the number of significant digits (the number of digits where "0" is neglected from the MSB) is equal to the number of significant digits of the maximum absolute value within a block. Accordingly, the above-mentioned shift quantity becomes equal to a shift quantity based on the maximum absolute value within the block.

Further, the digital signal from the input terminal 1 is also sent to a normalization (shift or floating) circuit 7 through an N word delay circuit 6 for time matching of the floating processing, and shift quantity information from the shift quantity detecting circuit 5 is also sent to the normalization circuit 7. This normalization circuit 7 left-shifts, by the detected shift quantity, respective inputted data of N words of one block to thereby carry out normalization or floating processing. Thereafter, a fixed number of bits may be taken out from the higher order by using, e.g., a requantizer, etc. Data from the normalization circuit 7 is taken out from terminal 8.

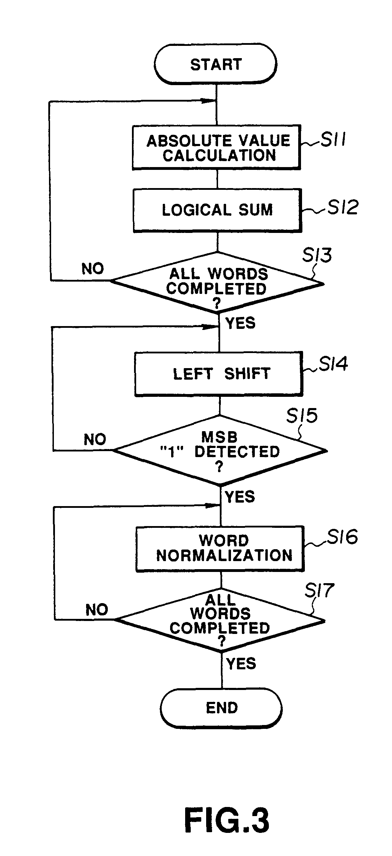

Fig. 3 is a flowchart showing the procedure in realizing the above-mentioned logical sum processing (block floating operation) by using software. At step S11 corresponding to the absolute value calculation circuit 2, absolute values of respective words are calculated. At the subsequent step S12, logical sum operation is performed similarly to the OR circuit 3. At the subsequent step S13, whether or not the logical sum operation of all words (N words) within one block is completed is discriminated. As a result, when it is discriminated that the logical sum operations of all words are not completed (NO), the processing returns to step S11. In contrast, when it is discriminated that the logical sum operations of all words are completed (YES), the processing proceeds to the subsequent step S14.

Steps S14 and S15 correspond to the operation at the shift quantity detecting circuit 5. At the step S14, left shift is carried out. At the step S15, whether or not it is detected that the Most Significant Bit (MSB) of the shifted result is "1" is discriminated. When "1" is not detected at MSB at the step S15 (NO), the processing returns to the step S14. In contrast, when "1" is detected at MSB at the step S15 (YES), the processing proceeds to the subsequent step S16. Steps S16, S17 correspond to the normalization circuit 7. At the step S16, respective words are normalized. At the step S17, whether or not N words within one block are all normalized is discriminated. As a result, when the discrimination result is NO, the processing returns to the step S16. In contrast, when the discrimination result is YES (normalization of all words is completed), the processing is completed.

In accordance with the above-mentioned embodiment, such a complicated processing to detect the maximum absolute value within a block as in the prior art becomes unnecessary, and simple processing to only take logical sums of absolute values within a block is carried out, thereby making it possible to determine floating coefficients, i.e., the above-mentioned shift quantities. This can lessen the number of steps in realizing, by using software such as a microprogram, the device for realizing a block floating operation, and permit the processing to be performed at a higher speed by reduction of the number of steps.

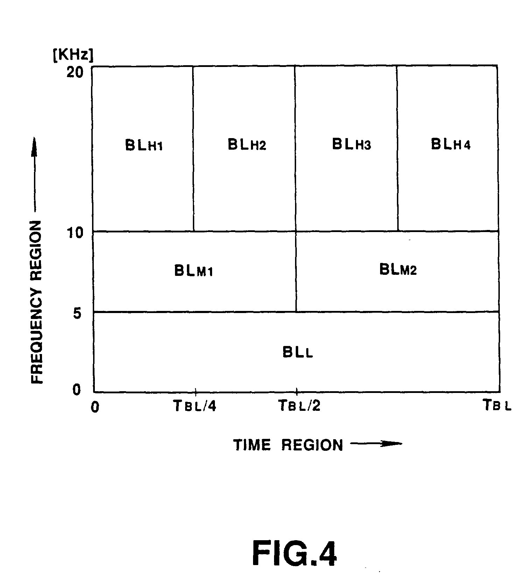

Here, an actual example relating to a standard input signal with respect to blocks every respective bands supplied to respective MDCT circuits 123, 124, 125 of Fig. 1 is shown in Fig. 4. In the actual example of Fig. 4, as the frequency shifts to a higher frequency band, the frequency band width is caused to be broader, and the time resolution is increased (the block length becomes shorter). With respect to a signal in the frequency band of 0 ~ 5 kHz on a lower frequency band side, one block BLL is set to, e.g., 256 samples. With respect to a signal in the medium frequency band of 5k ∼ 10kHz, block configuration is realized by blocks BLM1, BLM2 each having a length TBL/2 which is one half of the length TBL of the block BLL on the lower frequency band side. In addition, with respect to a signal in the frequency band of 10k ~ 20 kHz on a higher frequency band side, block configuration is realized by blocks BLH1, BLH2, BLH3, BLH4 each having a length TBL/4 which is one forth of that of the block BLL on the lower frequency band side. It is to be noted that in the case where the frequency band of 0 ~ 22 kHz is taken into consideration as a frequency band of an input signal, the lower frequency band is 0 ~ 5.5 kHz, the medium frequency band is 5.5 k ∼ 11 kHz, and the higher frequency band is 11k ∼ 22kHz.

The operation of the orthogonal transform block size determination circuit 106 will now be described. Namely, this circuit 106 receives the number of shiftable bits every 2.5 ms from the minimum block shift quantity calculation circuits 103, 104, 105 to allow them to be in a bundle at 20 ms, whereby when there exists the portion where the number of shiftable bits decreases suddenly, e.g., by 4 bits or more, the circuit 106 considers that there has been a sudden increase of the amplitude of a signal, thus permitting the orthogonal transform block size to be reduced to one half or one fourth. The block size thus determined is delivered to variable block shift quantity determination circuits 107, 108, 109 and first block floating circuits 120, 121, 122. The alteration of the block size may be controlled independently every respective bands of the band division filters 101, 102, or may be controlled in common. It is to be noted that information of the orthogonal transform block size is adapted to be outputted also from output terminal 133.

Turning back to Fig. 1, spectrum data or MDCT coefficient data on the frequency base obtained after having undergone MDCT processing at respective MDCT circuits 123, 124, 125 undergo block floating at second block floating circuits 129 every respective critical bands, or every plural bands obtained by further dividing the critical band in a higher frequency band, thus to realize effective use of bits. Also at this time, while the floating width may be also 6 dB step, the number of samples within the block of the second block floating may be caused to be smaller than the number of samples within the block of the first block floating, thereby making it possible to carry out block floating at a step finer than 6 dB in order to allow the gain of the block floating to be large, and to allow the gain of the efficient coding to be large. In this embodiment, block floating with about 1.8 dB being as a unit is carried out. Further, first and second floating quantities are not separately delivered to a decoding apparatus which will be described later, but the sum total of these block floating quantities is calculated at a block floating sum total quantity calculation circuit 128, and the sum total block floating quantity thus calculated is sent out from output terminal 132.

Respective signals which have been subjected to block floating every so called critical bands or every plural bands obtained by further dividing the critical band in a higher frequency band are sent to an adaptive bit allocation coding circuit 130. This critical band is a frequency band that takes into consideration the hearing sense characteristic of the human being. It has the bandwidth of narrow band noise signal which is masked by a pure sound having the same intensity as that of the noise and a frequency in the middle of the noise band. The band width of critical bands broadens with increasing frequency. The entire audio frequency range of 0-20 kHz is divided into e.g., 25 critical bands.

An allowed noise calculation circuit 127 calculates allowed noise quantities for every critical band. The so called masking effect is taken into consideration on the basis of spectrum data divided into critical bands to calculate the number of bits allocated to every critical band or groups of plural bands obtained by further dividing the critical band in a higher frequency band. The number of bits is allocated on the basis of those allowed noise quantities and energies or peak values, etc. of plural bands obtained by further dividing the critical band. Further, the adaptive bit allocation coding circuit 130 requantizes respective spectrum data (or MDCT coefficient date) in dependency upon the allocated bit number every respective critical bands or every plural bands obtained by further dividing the critical band in a higher frequency band. Data coded in this way is taken out through output terminal 131.

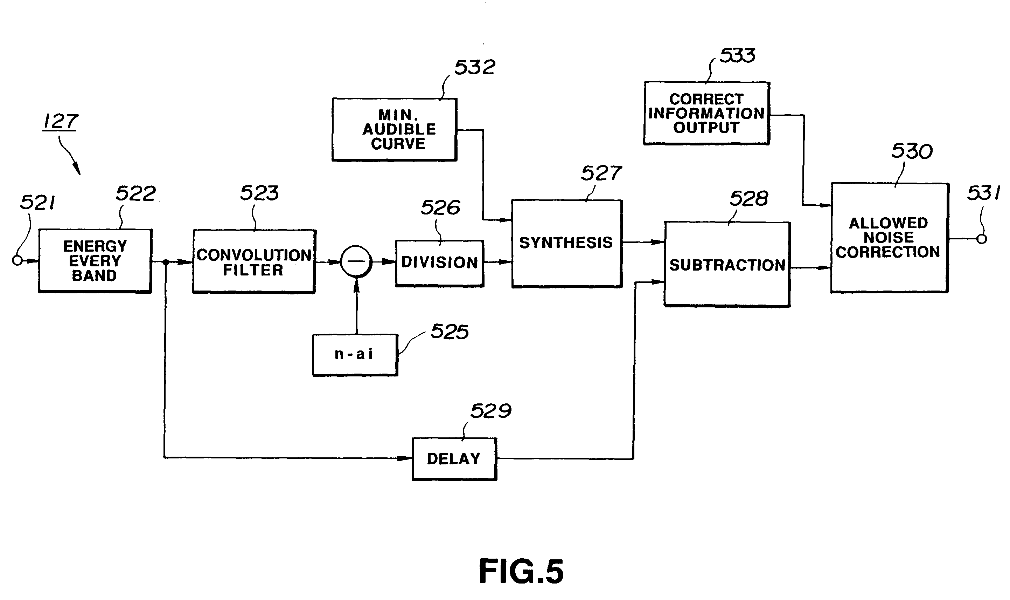

The allowed noise calculation circuit 127 will now be described in more detail. MDCT coefficients obtained at MDCT circuits 123, 124, 125 are obtained from signals subjected to block floating at the block floating circuits 120 ~ 122. In this case, since an allowed noise to be calculated in the allowed noise calculation circuit 127 must be based on original signals, it is not preferable to calculate an allowed noise on the basis of the above-mentioned signals which have been subjected to block floating. For this reason, block floating at the block floating circuits 120 ~ 122 are first released at a block floating release circuit 126. Thus, the allowed noise calculation circuit 127 calculates an allowed noise by using block shift quantities obtained from variable block shift quantity determination circuits 107, 108, 109. Fig. 5 is a circuit diagram showing, in a block form, the outline of the configuration of an actual example of the above-mentioned allowed noise calculation circuit 127. In Fig. 5, input terminal 521 is supplied with spectrum data on the frequency base from the block floating release circuit 126.

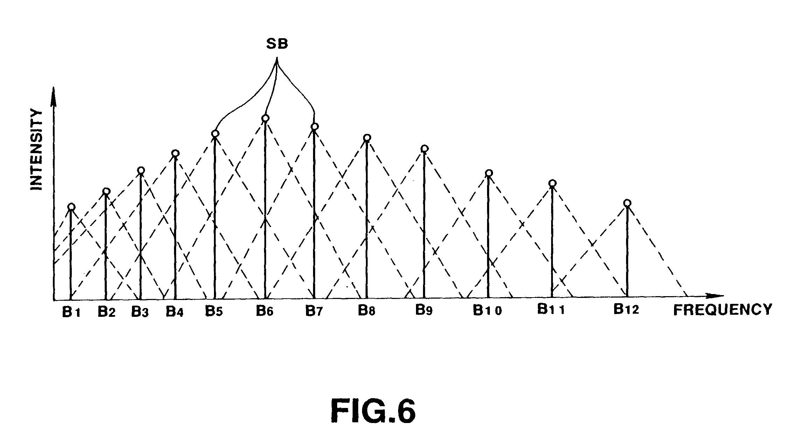

The input data on the frequency base is sent to a circuit 522 for calculating energies every bands, at which energies every critical bands are calculated, e.g., by using a method of calculating a sum total of respective amplitude values within the critical band, or other methods. In place of energies every respective bands, peak values or mean values, etc. of amplitude values may be used. A spectrum of a sum total value of respective bands, for example, obtained as an output from the energy calculation circuit 522 is generally called a bark spectrum. Fig. 6 shows bark spectrum (components) SB every respective critical bands. It is to be noted that the number of bands of the critical bands is represented with 12 bands (B1 ~ B12) for the brevity of illustration.

Here, in order to allow for the influence in so called masking of the bark spectrum (components) SB, such a convolution processing to multiply the bark spectrum (components) SB by a predetermined weighting function to add multiplied values is implemented. To realize this, outputs of the circuit 522 for calculating energies every bands, i.e., respective values of the bark spectrum (components) SB are sent to a convolution filter circuit 523. This convolution filter circuit 523 is comprised of, e.g., a plurality of delay elements for sequentially delaying input data, a plurality of multipliers (e.g., 25 multipliers corresponding to respective bands) for multiplying outputs from these delay elements by filter coefficients (weighting function), and a sum total adder for taking a sum total of respective multiplier outputs. By this convolution processing, the sum total of portions indicated by dotted lines in Fig. 6 is taken.

It is to be noted that the above-mentioned masking is the phenomenon that a signal is masked by any other signal by the characteristic from a viewpoint of the hearing sense of the human being so that the masked signal is not heard. For this masking effect, there are a time base masking effect by an audio signal on the time base and the same time masking effect by a signal on the frequency base. By such masking effect, even if there is any noise at the portion subjected to masking, this noise is to be not heard. For this reason, in an actual audio signal, a noise within the range subjected to masking is caused to be allowable noise.

Here, an actual example of multiplication coefficients (filter coefficients) of respective multipliers of the convolution filter circuit 523 is shown below. When the coefficient of a multiplier M corresponding to an arbitrary band is assumed to be 1, a coefficient of 0.15 is multiplied by outputs of respective delay elements at a multiplier M-1; a coefficient of 0.0019 is multiplied by those outputs at a multiplier M-2; a coefficient of 0.0000086 is multiplied by those outputs at a multiplier M-3; a coefficient of 0.4 is multiplied by those outputs at a multiplier M+1; a coefficient of 0.06 is multiplied by those outputs at a multiplier M+2; and a coefficient of 0.007 is multiplied by those outputs at a multiplier M+3. Thus, convolution processing of the bark spectrum SB is carried out. It is to be noted that M is an arbitrary integer of 1 ∼ 25.

Then, an output of the convolution filter circuit 523 is sent to a subtracter 524. This subtracter 524 serves to calculate a level a corresponding to an allowable noise level (which will be described later) in the above-mentioned convoluted region. It is to be noted that the level a corresponding to the allowable noise level (allowed noise level) is such a level to become equal to an allowed noise level every critical band by carrying out inverse convolution processing as described later. This subtracter 524 is supplied with an allowed function for calculating the above-mentioned level a (function representing a masking level). By increasing or decreasing the value that the allowed function takes, control of the level a is carried out. This allowed function is supplied from an (n - ai) function generator 525 as described below.

Namely, when the number given in order from a lower frequency band side of the critical band is assumed as i, the level a corresponding to the allowed noise level can be calculated by the following formula (A):$\text{α = S - (n-ai)}$ In the formula (A), n and a are a constant (a > 0), and S is the intensity of a convolution processed bark spectrum. In the formula (A), (n-ai) is the term indicating the allowed function. In this embodiment, n is set to 38 and a is set to 1. At this time, there is no degradation in the sound quality. Thus, satisfactory coding could be carried out.

In this way, the above-mentioned level a is determined. This data is transmitted to a divider 526. This divider 526 serves to implement inverse convolution to the level α in the above-mentioned convoluted region. Accordingly, by carrying out the inverse convolution processing, masking threshold is obtained from the level α. Namely, this masking threshold becomes an allowed noise spectrum. It is to be noted that while the above-mentioned inverse convolution processing requires complicated operation, the inverse convolution is carried out by using simplified divider 526 in this embodiment.

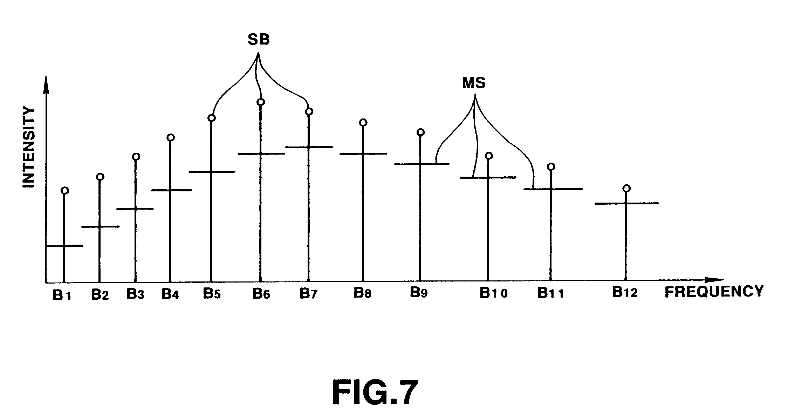

The masking threshold is transmitted to a subtracter 528 through a synthesis circuit 527. This subtracter 528 is supplied with an output from the circuit 522 for detecting energies every bands, i.e., the previously described bark spectrum SB through a delay circuit 529. Accordingly, subtractive operation between the masking threshold and the bark spectrum (components) SB is carried out at the subtracter 528. Thus, as shown in Fig. 7, the level less than the level indicated by the masking threshold MS of the bark spectrum SB is masked.

An output from the subtracter 528 is taken out through an allowed noise correction circuit 530 and through an output terminal 531, and is sent to a ROM (not shown), etc. in which, e.g., allocated bit number information is stored in advance. The ROM, etc. outputs allocated bit number information every respective bands in dependency upon an output (the level of a difference between energies every respective bands and an output of a noise level setting means (not shown)) obtained through the allowed noise correction circuit 530 from the subtracter 528. This allocated bit number information is sent to the adaptive bit allocation coding circuit 130. As a result, respective spectrum data on the frequency base from the MDCT circuits 123, 124, 125 are quantized by the number of bits allocated every respective bands.

In short, the adaptive bit allocation coding circuit 130 quantizes spectrum data every respective bands by the number of bits allocated in dependency upon the level of a difference between energies or peak values every critical bands or every plural bands obtained by further dividing the critical band in a higher frequency band and an output of the noise level setting means. It is to be noted that the delay circuit 529 is provided for delaying the bark spectrum SB from the energy detecting circuit 522 by taking into consideration quantities of delays at respective circuits preceding to the synthesis circuit 527.

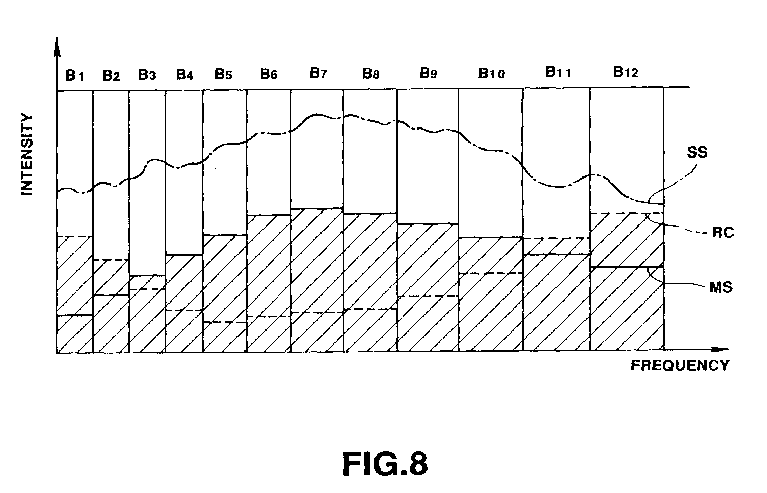

Meanwhile, in synthesis at the above-described synthesis circuit 527, it is possible to synthesize data indicating so called minimum audible curve RC which is the hearing sense characteristic of the human being as shown in Fig. 8 delivered from a minimum audible curve generator 532 and the above-mentioned masking threshold MS. In this minimum audible curve, when the noise absolute level is less than the minimum audible curve, this noise cannot be heard. This minimum audible curve varies, e.g., depending upon the difference of a reproducing volume at the time of reproduction even if coding is the same. However, in a realistic digital system, there is not great difference in entering of music into, e.g., the 16 bit dynamic range. Accordingly, if quantization noise in a frequency band easiest to be heard in the vicinity of 4 kHz, for example, it is considered that quantization noise less than the level of the minimum audible curve cannot be heard in other frequency bands.

Accordingly, on the assumption that a way of use is employed such that, e.g., noise in the vicinity of 4 kHz of a word length that the system has is not heard, when the minimum audible curve RC and the masking threshold MS are synthesized to provide an allowed noise level, the allowed noise level in this case can be down to the portion indicated by slanting lines in Fig. 8. It is to be noted that, in this embodiment, the level of 4 kHz of the minimum audible curve is caused to be in correspondence with the minimum level corresponding to, e.g., 20 bits. Additionally, a signal spectrum SS is shown together in Fig. 8.

Further, the allowed noise correction circuit 530 corrects an allowed noise level in an output from the subtracter 528 on the basis of, e.g., equi-loudness curve sent from a correction information output circuit 533. Here, the equi-loudness curve is a characteristic curve relating to the hearing sense characteristic of the human being. For example, sound pressures of a sound at respective frequencies, which is heard at the same intensity as that of a pure sound of 1 kHz, for example, are determined to connect them by curves. This equi-loudness curve is also called an equi-sensitivity curve of loudness. Further, in this equi-loudness curve, substantially the same curve as the minimum audible curve RC shown in Fig. 8 is depicted. In the equi-loudness curve, for example, in the vicinity of 4 kHz, even if a sound pressure is lowered by 8 ~ 10 dB than that at 1 kHz, sound is heard at the same intensity as that at 1 kHz. In contrast, in the vicinity of 50 kHz, unless a sound pressure is higher by about 15 dB than that at 1 kHz, sound is not heard at the same intensity.

For this reason, it is seen that it is desirable that the noise above the level of the minimum audible curve (allowed noise level) is caused to have a frequency characteristic given by the curve corresponding to the equi-loudness curve. From facts as described above, it is seen that correcting the allowed noise level in consideration of the equi-loudness curve is in conformity with the hearing sense characteristic of the human being.

Here, the correction information output circuit 533 may be constructed to correct the allowed noise level on the basis of information of a difference between a detected output of an output information quantity (data quantity) in quantization at the coding circuit 130 and a bit rate target value of the finally coded data. The reason why such circuit configuration is employed is as follows. Namely, there are instances where the total number of bits obtained by implementing in advance temporary adaptive bit allocation to all bit allocation unit blocks may have an error with respect to a fixed number of bits (target value) determined by the bit rate of the finally coded output data. Therefore, bit allocation is carried out for a second time in order to allow the error to become equal to zero. Namely, bit allocation is carried out such that when the total number of allocated bits is less than the target value, the number of bits indicating a difference therebetween is allocated (assigned) to respective unit blocks to add it thereto, while when the total number of allocated bits is greater than the target value, the number of bits indicating a difference therebetween is allocated (assigned) to respective unit blocks to reduce it therefrom.

In order to carry out such an operation, an error from the target value of the total number of allocated bits is detected. In accordance with the error data, correction information output circuit 533 outputs correction data for correcting respective allocated bit numbers. Here, in the case where the error data indicates shortage of the number of bits, a greater number of bits are used per unit block. Namely, consideration can be made in connection with the case where the quantity of data is greater than the target value. In contrast, in the case where the error data is data indicating remainder of the number of bits, a lesser number of bits can be used per unit block. Namely, consideration can be made in connection with the case where the quantity of data is less than the target value.

Accordingly, from the correction information output circuit 533, data of the correction value for correcting an allowed noise level in an output from the subtracter 528, e.g., on the basis of information data of the equi-loudness curve is outputted in accordance with the error data. A correction value as described above is transmitted to the allowed noise correction circuit 530. Thus, the allowed noise level from the subtracter 528 is corrected. Further, as another embodiment, the number of bits of the target value may be fixedly allocated to respective blocks from the beginning. At this time, a quantity of operations can be reduced to much degree. As a further embodiment, allocation of bits dependent upon the magnitudes of signals of respective blocks may be carried out. At this time, the noise energy can be minimized.

A digital signal decoding apparatus of an embodiment of this invention will now be described with reference to Fig. 9 and figures succeeding thereto.

Namely, in Fig. 9, an input terminal 231 is supplied with coded data on the frequency base obtained from the output terminal 131 of Fig. 1. This coded data is first sent to an adaptive bit allocation decoding circuit 230, at which it is subjected to decoding processing. Then, the decoded data thus obtained are sent to inverse floating circuits 229 for releasing the second block floating. These inverse floating circuits 229 process such decoded data every critical bands or every plural bands obtained by further dividing the critical band in a higher frequency band. The shift quantity of the second block floating used at this time is calculated as follows.

A floating quantity from the above-described coding apparatus is first delivered to a terminal 232. A first shift quantity calculation circuit 234 for calculating the first block floating quantity calculates, every orthogonal transform block, a minimum bit shift quantity of floating quantities included therein to thereby calculate the first block floating quantity. The first block floating quantity thus obtained is a value with 6 dB (1 bit) being as a unit.

A second shift quantity calculation circuit 228 for calculating a second block floating quantity subtracts the first block floating quantity which has been calculated at the first shift quantity calculation circuit 234 from a floating quantity from the coding apparatus, which has been delivered to the terminal 232, every critical bands or every plural bands obtained by further dividing the critical band in a higher frequency band to thereby calculate the second block floating quantity.

Further, an input terminal 233 is supplied with block size data from the coding apparatus. This block size data is delivered to the first shift quantity calculation circuit 234 and IMDCT-H circuit 223 on a higher frequency band side, IMDCT-M circuit 224 in a medium frequency band, and IMDCT-L circuit 225 on a lower frequency band side which serve as inverse orthogonal transform circuits every respective bands. In this embodiment, by allowing the calculation method at the IMDCT-H circuit 223 and the IMDCT-M circuit 224 in the middle and higher frequency bands and the calculation method at the IMDCT-L circuit 225 in the lower frequency band to be different from each other, respective operation accuracies are caused to be different.

First, the IMDCT-H circuit 223 and the IMDCT-M circuit 224 will now be described. A portion of the word where the second block floating is released by the inverse floating circuit 229 by using a second block floating quantity from the second shift quantity calculation circuit 228 is subjected to IMDCT operation at the IMDCT-H circuit 223 and IMDCT-M circuit 224. Thus, the orthogonally transformed state of the coded signal is released. At the same time, in the process of IMDCT operations at IMDCT-H circuit 223 and IMDCT-M circuit 224, a scale down operation corresponding to an output of the scale down times determination circuit 227 which will be described later is implemented. Further, scaled down inverse orthogonally transformed outputs are shifted in dependency upon a third shift quantity from a third shift quantity calculation circuit 226 which will be described later, and are then outputted with the scale being reduced to 1/2, i.e., in the state shifted by one bit.

Here, the scale down times determination circuit 227 determines the number of scale down times at the IMDCT-H circuit 223 and the IMDCT-M circuit 224 from an output of the first shift quantity calculation circuit 234.

Further, the third shift quantity calculation circuit 226 calculates a third shift quantity from the first shift quantity and the scale down times to deliver it to the IMDCT-H circuit 223 and the IMDCT-M circuit 224. It is to be noted that the above-mentioned third shift quantity is a shift quantity for allowing outputs of the IMDCT-H circuit 223 and the IMDCT-M circuit 224 to be uniformly equal to one half of the normal scale, i.e., a value shifted by one bit to the LSB side.

An actual operation at the scale down determination circuit 227, the third shift quantity calculation circuit 226, the IMDCT-H circuit 223 and the IMDCT-M circuit 224 will now be described in detail by using an example of the IMDCT calculation technique. The IMDCT calculation procedure will be first described. The calculation formula of IMDCT is given by the following formula (1). Calculation of IMDCT can be carried out at a high speed by using, e.g., FFT (First Fourier Transform).

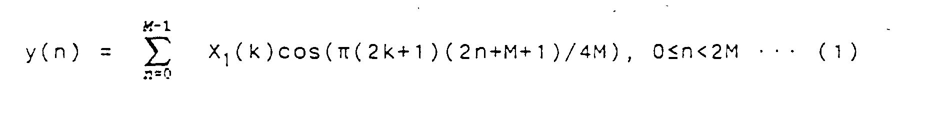

The calculation procedure is shown below:

First, U(k) is defined by the following formula (2):$\text{U(k) = X(2k), 0≤k<M/2} \text{= -X(2M-1-2k), M/2≤k<M}$

From the above formula (2), complex series Z(ℓ) is calculated by transform operation expressed by the following formula (3):$\text{Z(ℓ) = (U(2ℓ)+iU(2ℓ+1))exp(-i2πℓ/M), 0≤ℓ <M/2}$

In actual terms, a calculation to develop the complex number into the real number is carried out as indicated by the following formula (4):$\text{Re[Z(ℓ)] = U(2ℓ)cos(-2πℓ/M)-U(2ℓ+1)sin(-2πℓ/M)} \text{Im[Z(ℓ)] = U(2ℓ+1)cos(-2πℓ/M)+U(2ℓ)sin(-2πℓ/M)} \text{0≤ℓ <M/2···}$

Here, FFT is implemented to z(ℓ) as indicated by the following formula (5) to thereby provide z(n):

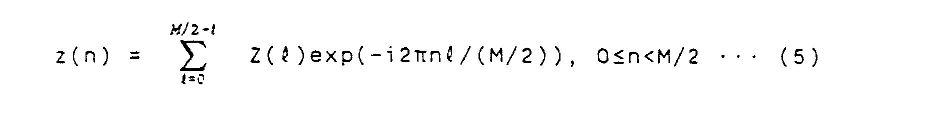

In the operation of FFT, e.g., Cooley-Tukey algorithm generally well known is used to implement N stages ((n-th power of 2) = M/2) of the butterfly operation to Z(ℓ).

A transfer operation indicated by the following formula (6) is implemented to the output z(n) of FFT, thereby making it possible to provide u(n).${\text{u(n) = a}}_{\text{0,n}} {\text{Re[z(n)]+a}}_{\text{1,n}} \text{Re[z(M/2-1-n)]} {\text{+a}}_{\text{2,n}} {\text{Im[z(n)]+a}}_{\text{3,n}} \text{Im[z(M/2-1-n)]} {\text{u(M-1-n) = a}}_{\text{2,n}} {\text{Re[z(n)]-a}}_{\text{3,n}} \text{Re[z(M/2-1-n)]} {\text{-a}}_{\text{0,n}} {\text{Im[z(n)]+a}}_{\text{1,n}} \text{Im[z(M/2-1-n)]} \text{0 ≤ n < M/2}$

In this formula (6), conditioning indicated by the following formula (7) is implemented:${\text{a}}_{\text{0,k}} \text{= (1/2)(cos(π(2k+1)/4MD-sin(5π(2k+1)/4M)} {\text{a}}_{\text{1,k}} \text{= (1/2)(cos(π(2k+1)/4MD+sin(5π(2k+1)/4MD} {\text{a}}_{\text{2,k}} \text{= (1/2)(sin(π(2k+1)/4MD+cos(5π(2k+1)/4MD} {\text{a}}_{\text{3,k}} \text{= (1/2)(-sin(π(2k+1)/4MD+cos(5π(2k+1)/4MD}$

Then, u(n) is subjected to sequencing as shown below to expand it to the length 2M to thereby obtain y(n) as indicated by the following formula (8):$\text{y(n) = u(n+M/2), 0≤n<M/2} \text{= -u(3M/2-1-n), M/2≤n<3M/2} \text{= -u(n-3M/2), 3M/2≤n<2M}$

The calculation procedure of IMDCT has been described above.

The relationship between the number of scale down times determined by the scale down times determination circuit 227 and the IMDCT operation will now be described. In the IMDCT circuits of Fig. 9, in order to prevent an overflow in the process of operation described in connection with the drawbacks of the prior art, the operation accuracy of the IMDCT is scaled down. At this time, if the operation accuracy is excessively lowered, a sound obtained is offensive to the ear. For this reason, scale down is gradually carried out. Accordingly, scale down is repeatedly carried out to such a degree that a subsequent sound is not offensive to the ear, and to such a degree that no overflow takes place. In dependency upon the number of scale down times, the above-mentioned formulas (4), (5) and (6) are selectively applied in actual terms. In the case of the formulas (4), (6), respective one scale down operations are carried out. On the other hand, in the case of the formula (5), N times of scale down operations are carried out because this formula is applied to respective stages of the butterfly operation. Of course, this scale down is variable, and therefore varies in dependency upon a first shift quantity. Accordingly, the maximum number of times for implementing the scale down operations (maximum scale down times) is determined by the number of stages of the butterfly y operation, i.e., the block length M for carrying out IMDCT. When the maximum number of scale down times is now assumed to be MSD, this maximum number of scale down times MSD can be expressed by the following formula (9). It is to be noted that N in the formula (9) indicates the number of stages of the butterfly operation.$\text{MSD = 1 + N + 1} \text{= N + 2}$

Here, in the case where, e.g., M is 128, the number of stages N of the butterfly operation is 6. For this reason, the maximum scale down times MSD is 8 from the above-mentioned formula (9). Therefore, there is no possibility that the number of times of scale down operations determined by the scale down times determination circuit 227 is above 8.

Further, when it is assumed that an output of the first shift quantity calculation circuit 234 is IBF1 (first shift quantity IBF1), that the number of scale down operations is ISD, and that the maximum number of scale down operations is MSD, the number of scale down times can be expressed by the following formula (10):$\text{ISD = 1 (IBF1<0)} \text{ISD = IBF1 + 1 (0≤IBF1<MSD)} \text{ISD = MSD (IBF1≥MSD)}$

Here, when the first shift quantity IBF1 is a positive number, it indicates a shift quantity to the MSB side. In contrast, when the first shift quantity IBF1 is a negative number, it indicates a shift quantity to the LSB side in terms of the absolute value. Further, when the number of scale down operations is 1, scale down is implemented by a quantity indicated by the above-mentioned formula (4). Every time the value of the number of scale down operations ISD is increased by 1, scale down is implemented in order of the first stage of the formula (5) and the second stage thereof.

The third shift quantity calculation circuit 226 will now be described. This third shift quantity is a shift quantity for allowing the scale at the time of an output of the formula (8) in the IMDCT calculation procedure to be uniformly adjusted, and is a shift quantity for allowing the scale at the time of output of the formula (8) to be equal to a value which is one half of the normal scale, i.e., for allowing it to be placed in the state shifted by one bit to the LSB side. This third shift quantity will be referred to as IBF3. When the third shift quantity IBF3 is a positive number, it indicates a shift quantity to the LSB side. In contrast, when the third shift quantity IBF3 is a negative number, it indicates a shift quantity to the MSB side in terms of the absolute value. The reason why the output of the formula (8) is scaled down to 1/2 is to prevent an overflow, and a margin of one bit is given on the MSB side. Further, the relationship of the first shift quantity IBF1, the number of scale down operations ISD, and the third shift quantity IBF3 is irrelevant to the value of the first shift quantity IBFl, and can be expressed by the following formula (11):$\text{IBF1 - ISD - IBF3 = -1}$

In the above-mentioned formula (11), floating corresponding to the first shift quantity IBF1 is released by the number of scale down operations ISD and the third shift quantity IBF3. The scale of each word at the time of IMDCT output indicates uniformly -1, i.e., that it is in the state shifted by one bit to the LSB side.

Namely, the relationship of the first shift quantity IBF1, the number of scale down operations ISD and the third shift quantity IBF3 in the case where, e.g., the IMDCT block length M is 128 (the number of butterfly stages of FFT is 6) is as shown in Table 1. In this Table, asterisk (∗) implies that scale down is implemented. From the Table 1, also in the case where the first shift quantity IBF1 takes other values than those indicated in this Table 1, the number of scale down times ISD and the third shift quantity IBF3 are determined in accordance with the above-mentioned rule.

**Table 1**

| | | | | | | | | | | | | | |
|---|---|---|---|---|---|---|---|---|---|---|---|---|---|
| IBF1 | | -1 | 0 | 1 | 2 | 3 | 4 | 5 | 6 | 7 | 8 | 9 | 10 |
| ISD | | 1 | 1 | 2 | 3 | 4 | 5 | 6 | 7 | 8 | 8 | 8 | 8 |
| FORMULA (4) | | ∗ | ∗ | ∗ | ∗ | ∗ | ∗ | ∗ | ∗ | ∗ | ∗ | ∗ | ∗ |
| FORMULA (5) | 1-ST STAGE | | | ∗ | ∗ | ∗ | ∗ | ∗ | ∗ | ∗ | ∗ | ∗ | ∗ |
| | 2-ND STAGE | | | | ∗ | ∗ | ∗ | ∗ | ∗ | ∗ | ∗ | ∗ | ∗ |
| | 3-RD STAGE | | | | | ∗ | ∗ | ∗ | ∗ | ∗ | ∗ | ∗ | ∗ |
| | 4-TH STAGE | | | | | | ∗ | ∗ | ∗ | ∗ | ∗ | ∗ | ∗ |
| | 5-TH STAGE | | | | | | | ∗ | ∗ | ∗ | ∗ | ∗ | ∗ |
| | 6-TH STAGE | | | | | | | | ∗ | ∗ | ∗ | ∗ | ∗ |
| FORMULA (6) | | | | | | | | | | ∗ | ∗ | ∗ | ∗ |
| IBF3 | | -1 | 0 | 0 | 0 | 0 | 0 | 0 | 0 | 0 | 1 | 2 | 3 |

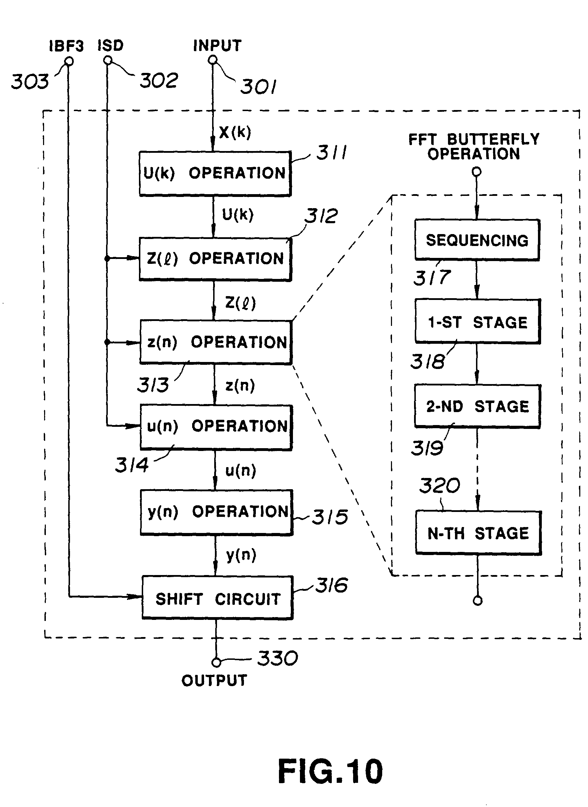

The above-mentioned IMDCT-H circuit 223 and the IMDCT-M circuit 224 will now be described by taking an example of a more practical configuration. Fig. 10 is a circuit diagram showing, in a block form, the internal configuration of the IMDCT-H circuit 223 and the IMDCT-M circuit 224 in the case where an operation is performed on the basis of the calculation procedure of the IMDCT.

Namely, the circuit configuration of Fig. 10 comprises a terminal 301 supplied with data X(k) from the inverse floating circuit 229, a terminal 302 supplied with the number of scale down operations ISD from the scale down times determination circuit 227, a terminal 303 supplied with a third shift quantity IBF3 from the third shift quantity calculation circuit 226, a U(k) operation circuit 311 for calculating U(k) by the operation of the formula (2), a Z(ℓ) operation circuit 312 for calculating Z(ℓ) by the operation of the formula (3) or the formula (4), a z(n) operation circuit 313 for calculating z(n) by the operation of the formula (5), a u(n) operation circuit 314 for calculating u(n) by the operation of the formula (6), a y(n) operation circuit 315 for calculating y(n) by the operation of the formula (8), a shift circuit 316 for carrying out shift operation corresponding to the third shift quantity IBF3, and an output terminal 330. By these circuit components, operations are performed in succession in order of the formulas (2), (4), (5), (6), (8) in accordance with the above-described calculation procedure. Further, the Z(ℓ) operation circuit 312, the z(n) operation circuit 313 and the u(n) operation circuit 314 are supplied with the number of scale down operations ISD, at which scale down is implemented on the basis of that value. In addition, the shift circuit 316 is supplied with a third shift quantity IBF3 through the terminal 303. At this shift circuit 316, all words of the output y(n) of the y(n) operation circuit 315 are shifted every respective words by the third shift quantity IBF3. Thereafter, an output of the shift circuit 316 is taken out from the terminal 330. The output thus obtained serves as outputs of the IMDCT-H circuit 623 and the IMDCT-M circuit 624. Thus, a shift quantity corresponding to the first shift quantity IBF1, i.e., a floating quantity is completely released. It is to be noted that outputs of respective words at the IMDCT-H circuit 623 and the IMDCT-M circuit 624 are outputted with the scale being reduced to one half, i.e., in the state shifted by one bit to the LSB side.

Here, the z(n) operation circuit 313 shown in Fig. 10 is constituted, for the purpose of implementing the N stages ((the N-th power of 2) = M/2) of the butterfly operation, with a sequencing circuit 317 for implementing sequencing to data of the output Z(ℓ), and the first to N-th stages of operation circuits 318 ∼ 320 for the butterfly operation. In this z(n) operation circuit 313, the value of the number of scale down operations ISD is applied as described above. This z(n) operation circuit 313 implements scale down on the basis of that value.

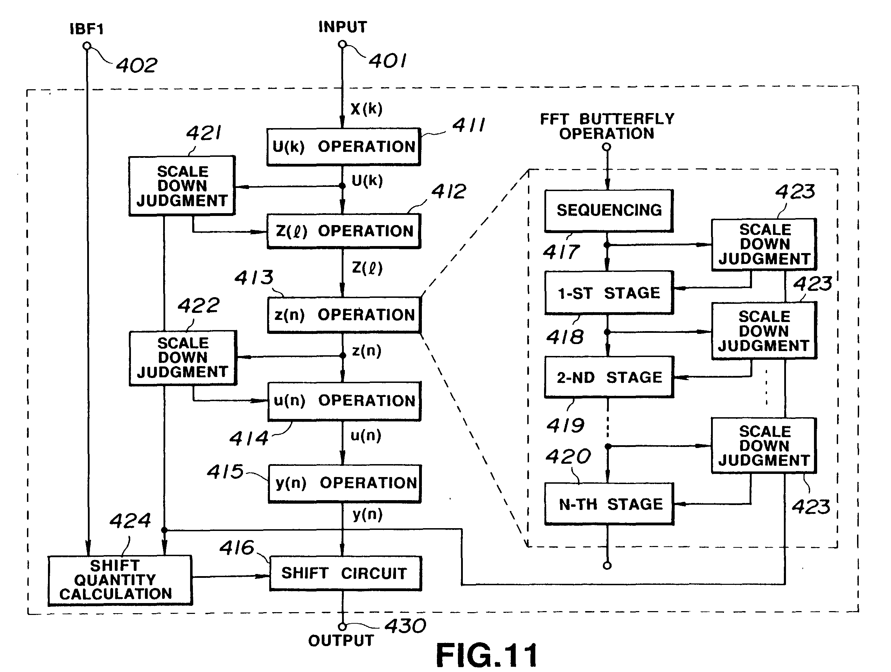

The IMDCT-L circuit **225** will now be described below. Fig. 11 is a circuit diagram showing, in a block form, the state of operation in the IMDCT-L circuit 225. In Fig. 11, a portion of the word where the second block floating is released is delivered to terminal 401. Thus, operation is performed in accordance with the above-described IMDCT calculation procedure similarly to the operations in the case of the IMDCT-H circuit 223 and the IMDCT-M circuit 224. Here, the difference between the operation in the IMDCT-L circuit 225 and the operations in the IMDCT-H circuits 223 and the IMDCT-M circuit 224 resides in the manner in which scale down is implemented. At this IMDCT-L circuit 225, whether or not scale down is implemented is judged by making reference to input data trains of respective formulas.

For example, in Fig. 11, a data train of an input X(k) through terminal 401 is sent to a U(k) operation circuit 411 for performing an operation similar to that of the formula (2). Then, an output U(k) from the U(k) operation circuit 411 is sent to a scale down judgment circuit 421. By this scale down judgment circuit 421, whether or not scale down is implemented is judged at a Z(ℓ) operation circuit 412 for performing an operation similar to that of the formula (3) or the formula (4). By judgment results at the scale down judgment circuit 421, an operation of the formula (3) or the formula (4) is performed at the Z(ℓ) operation circuit 412. Thus, its operation result Z(ℓ) is provided. At the same time, the result of the scale down judgment at the scale down judgment circuit 421 is temporarily stored into a memory such as a register, etc., and is then sent to a shift quantity calculation circuit 424 through a scale down judgment circuit 422 of the succeeding stage.

In the configuration of Fig. 11, also with respect to the z(n) operation circuit 413 and the u(n) operation circuit 414 similar to that of Fig. 10, whether or not scale down is implemented is judged by the scale down judgment circuit 422 and the scale down judgment circuit 423 in a manner as described above. In dependency upon the judgment result, a required scale down is implemented.

Here, in the scale down judgment circuits 421, 422, 423, values serving as a scale down criterion are set in advance every respective calculation formulas for which scale down is required. These scale down judgment circuits 421, 422, 423 compare values of input data trains of corresponding calculation formulas (e.g., the above-mentioned U(k) in the Z(ℓ) operation circuit 412 of the formula (3) or the formula (4)) and values of the respective scale down criteria, whereby unless the absolute values of all input data trains (e.g., U(k)) are above the scale down criterion, it is judged that scale down should not be implemented. In contrast, if any one of the absolute values of the input data trains is above the scale down criterion, it is judged that scale down should be implemented.

The above-mentioned scale down criteria are a value for judging presence or absence of scale down from a value of input data train so that the output data train of respective calculation formulas corresponding to respective operation circuits do not overflow. The value for scale down judgment is set, for example, as follows.

Assuming that the range which can be represented by data is -1.0 ∼ 1.0, values above this range may overflow. For example, in the case where y(n) = x1(n) + x2(n), the input data train is x1(n), x2(n), and the output data train is y(n). It can be said that if respective absolute values |x1(n)|, |x2(n)| of the input data train do not both exceed 0.5, there is no possibility that the absolute value |y(n)| of the output data train may exceed 1.0, so any overflow does not take place. In contrast, if any one of the absolute values |x1(n)|, |x2(n)| is above 0.5, there occurs the possibility that the absolute value |y(n)| may exceed 1.0, i.e., any overflow may take place. Accordingly, there occurs the necessity of implementing scale down for the purpose of preventing overflow.

From facts as described above, in the case where y(n) = x1(n) + x2(n), the absolute values |x1(n)|, |x2(n)| of the input data train are compared with 0.5. As a result, if all absolute values |x1(n)|, |x2(n)| do not exceed 0.5, there is no necessity of implementing scale down. On the other hand, if any one of the absolute values |x1(n)|, |x2(n)| is above 0.5, scale down is implemented. In a manner stated above, whether or not there is scale down can be judged. The value of 0.5 serves as a scale down criterion. Of course, the value of the scale down criterion is not fixed. Basically, any value may be used.

The scale down criterion at the Z(ℓ) operation circuit 413 expressed by the formula (3) or (4) will now be described in more practical manner. At the Z(ℓ) operation circuit 413, calculation is carried out in accordance with the formula (4). Since the maximum value that the following formula (12) can take is 1.414, if the absolute value |U(k)| of the input data train does not exceed 1/1.414 = 0.707, there is no possibility that the absolute values |Re(z(ℓ))|, |Im(Z(ℓ))| of the output data train do not both exceed 1.0.$\text{|cos(-2πℓ/M| + |sin(-2πℓ/M)|}$

Accordingly, it is desirable to set the scale down criterion at the Z(ℓ) operation circuit 413 of the formula (4) to 0.707. Further, for the purpose of simplifying the scale down judgment, there is a method of setting the scale down criterion to 0.5. Similarly, also with respect to respective stages of the z(n) operation circuit 413 of the formula (5) and the u(n) operation circuit 414 of the formula (6), scale down criteria may be respectively set.

Turning back to Fig. 11, the terminal 402 is supplied with the first shift quantity IBF1. This first shift quantity IBF1 is delivered not only to the scale down judgment circuits 421, 422 and 423, but also to the shift quantity calculation circuit 424. At the shift quantity calculation circuit 424, a shift quantity IBF4 for carrying out shift operation at the shift circuit 416 is calculated. Here, when the sum total number of times for implementing scale down operation which are obtained from the scale down judgment circuits 421, 422, 423 is assumed to be ISDL, the above-mentioned shift quantity IBF4 is expressed by the following formula (13):$\text{IBF4 = IBF1 - ISDL + 1}$

Namely, the above-mentioned shift quantity IBF4 is a shift quantity for allowing an output of the IMDCT-L circuit 625 to be uniformly one half of a normal scale, i.e., a value shifted by one bit to the LSB side.

All words of the output y(n) of the y(n) operation circuit 415 of the formula (8) are shifted every respective words in dependency upon the shift quantity IBF4 by the shift circuit 416, and are taken out from terminal 430. They serve as an output of the IMDCT-L circuit 625. Thus, block floating having a shift quantity corresponding to the first shift quantity IBF1, i.e., a floating quantity is completely released. It is to be noted that outputs of respective words at the IMDCT-L circuit 625 are outputted with the scale being reduced to one half, i.e., in the state shifted by one bit.

Turning back to Fig. 9, outputs of the IMDCT-H circuit 223, and the IMDCT-M circuit 224 are respectively sent to 1 bit shift circuits 220, 221. At these circuits, words outputted at the scale of 1/2 are shifted by one bit to the MSB side so that its scale is caused to be in correspondence with a normal scale for a second time. Thus, there results the state where the first block floating is completely released.

Further, an output of the IMDCT-L circuit 225 is sent to one bit shift circuit 222. At this circuit, word outputted at the scale of 1/2 is shifted by one bit to the MSB side so that its scale is caused to be in correspondence with a normal scale for a second time. Thus, there results the state where the first block floating is completely released.

Thereafter, outputs of 1 bit shift circuits 221, 222 are synthesized at a band synthesis filter 202, and an output of the 1 bit shift circuit 220 and an output of the band synthesis filter 202 are synthesized at a band synthesis filter 201, resulting in a reproduced signal. The reproduced signal thus obtained is taken out from output terminal 200.

As described above, the digital signal decoding apparatus according to this embodiment adaptively controls a scale down operation in a low frequency band, thereby making it possible to improve the operation efficiency and the operation accuracy of the IMDCT operation in the decoding apparatus. In addition, this invention may be applied not only to the coding/decoding apparatus of the above-described embodiment, but also to other coding/decoding apparatuses. It is to be noted that this invention is not limited only to the above-mentioned embodiment, but may be applied not only to a signal processor for audio PCM signal as described above but also to, e.g., a signal processor for digital speech signal, etc.

In accordance with the digital signal coding/decoding apparatus described above, since the scale down operation at the time of the orthogonal transform operation is adaptively judged, on the coding apparatus side, every calculation formulas on the basis of values in the process of operation. For this reason, an overflow in the process of operation can be prevented, any extra scale down operation which may cause degradation in the operation accuracy can be eliminated. Thus, noise by an operation error can be reduced. Further, on the decoding apparatus side, adaptive scale down operation acts in such a manner that when a signal to be decoded becomes closer to a sine wave signal, i.e., a signal having a large tonality, the number of scale down times is reduced. Thus, such adaptive scale down operation is effective for a signal such as a sine wave difficult to be subjected to masking. In addition, in the orthogonal transform operation every respective filter outputs, adaptive scale down operation is applied only to signals in the low frequency band, and the fixed scale down operation is used for signals in the medium and higher frequency bands. For this reason, an increase in the scale of the hardware followed by an increase in an operation quantity can be minimized.

## Claims

1. An apparatus for coding a digital input signal to provide a coded signal, the apparatus comprising:
non-block frequency analysis means (101,102) for carrying out a frequency analysis of the digital input signal to provide a frequency range signal in each of plural frequency ranges;
block frequency analysis means (123, 124, 125) for carrying out a block frequency analysis of the frequency range signals provided by the non-block frequency analysis means; and
means (130) for quantizing the block frequency analysed signals produced by the block frequency analysis means;
**characterised in that**
the block frequency analysis means additionally comprises:
scale-down means wherein the scale down means is operable to carry out an adaptively controlled scale down operation on the values in the block frequency analysis in a lower frequency one of the frequency ranges and to carry out a fixed scale down operation on the values in the block frequency analysis in a higher frequency one of the frequency ranges

2. The apparatus of Claim 1, wherein the scale down means in the lower frequences one of the frequency ranges, performs an adaptive scale down operation, and wherein the values are scaled down a number of times adaptively determined by a judgement of values in block frequency analysis performed by the block frequency analysis means.

3. The apparatus of Claim 2, wherein the-scale down means additionally comprises:
means for judging a signal tonality to provide a magnitude of the signal tonality, and
means for adaptively determining, in response to the magnitude of the signal tonality, the number of times the values are to be scaled down.

4. The apparatus of Claim 1, 2 or 3 wherein:
the block frequency analysis means includes means for applying block floating to the outputs in the respective frequency ranges of the non-block frequency analysis means, and
the block floating is released by the block frequency analysis performed by the block frequency analysis means.

5. The apparatus of Claim 4, wherein the scale down means repeatedly scales down the values in the block frequency analysis means to release the block floating.

6. The apparatus of Claim 5, wherein:
the block floating means applies block floating defined by a block floating magnitude; and
the scale down means repetitively scales down the values in the block frequency analysis performed by the block frequency analysis means a number of times corresponding to the block floating magnitude to release the block floating.

7. Apparatus for decoding a coded signal wherein the coded signal is decoded to provide a digital output signal, the coded signal being obtained by conducting a non-block frequency analysis (101, 102) of a digital input signal to provide a frequency range signal in each of plural frequency ranges, dividing each frequency range signal into blocks and carrying out, on every block of the frequency range signal in each of the frequency ranges, a block frequency analysis (123-125) to provide frequency analysed signals, and quantizing (130) the block frequency analysed signals to provide a block of the coded signal, the apparatus comprising:
inverse quantizing means (230) for dequantizing the quantized block frequency analysed signals,
block frequency synthesis means (223, 224, 225) for performing a block frequency synthesis to transform, from the frequency domain to the time domain dequantized block frequency analysed signals in each of the frequency ranges in each block of the coded signal, the block frequency synthesis means providing, in each of the frequency ranges, a block of reproduced frequency range signal; and
non-block frequency synthesis means (201, 202) for performing a frequency synthesis of the reproduced frequency range signals from the non-block frequency synthesis means to provide the digital output signal,
**characterised in that**
the block frequency synthesis means additionally comprises:
scale-down means, wherein the scale down means is operable to carry out an adaptively controlled scale down operation on the values in the block frequences synthesis in a lower frequency one of the frequency ranges and to carry out a fixed scale down operation on the values in the block frequency synthesis in a higher frequency one of the frequency ranges.

8. The apparatus of Claim 7, wherein the scale down means:
in the lower frequences one of the frequency ranges, performs an adaptive scale down operation wherein the values are scaled down a number of times adaptively determined by a judgement of values in block frequency synthesis performed by the block frequency synthesis means.

9. The apparatus of Claim 8, wherein the scale down means additionally comprises:
means for judging a signal tonality to provide a magnitude of the signal tonality, and
means for adaptively determining, in response to the magnitude of the signal tonality, the number of times the values are to be scaled down.

10. The apparatus of Claim 7, 8, or 9, wherein:
the block frequency synthesis means includes means for applying block floating to the outputs in the respective frequency ranges of the non-block frequency synthesis means, and
the block floating is released by the block frequency synthesis performed by the block frequency synthesis means.

11. The apparatus of Claim 10, wherein the scale down means repeatedly scales down the values in the block frequency synthesis performed by the block frequency synthesis means to release the block floating.

12. The apparatus of claim 11, wherein:
the block floating means applies block floating defined by a block floating magnitude; and
the scale down means repetitively scales down the values in the block frequency synthesis performed by the block frequency synthesis means a number of times corresponding to the block floating magnitude to release the block floating.

13. A digital signal processing system comprising a coding apparatus according to anyone of claims 1 to 6 and a decoding apparatus according to anyone of claims 7 to 12.

## Patentansprüche

1. Gerät zur Kodierung eines digitalen Eingangssignals zur Erzeugung eines kodierten Signals, mit:
einer Nichtblockfrequenz-Analyseeinrichtung (101, 102) zur Ausführung einer Frequenzanalyse des digitalen Eingangssignals zur Erzeugung eines Frequenzbereichsignals in jedem von mehreren Frequenzbereichen,
einer Blockfrequenz-Analyseeinrichtung (123, 124, 125) zur Ausführung einer Blockfrequenzanalyse der von der Nichtblockfrequenz-Analyseeinrichtung erzeugten Frequenzbereichsignale, und
einer Einrichtung (130) zur Quantisierung der von der Blockfrequenz-Analyseeinrichtung erzeugten blockfrequenzanalysierten Signale,
**dadurch gekennzeichnet, dass**
die Blockfrequenzan-Alyseeinrichtung zusätzlich aufweist:
eine Verkleinerungseinrichtung, die derart betreibbar ist, dass sie an den Werten bei der Blockfrequenzanalyse bei einer niedrigeren Frequenz eines der Frequenzbereiche eine adaptiv gesteuerte Verkleinerungsoperation ausführt und an den Werten bei der Blockfrequenzanalyse bei einer höheren Frequenz eines der Frequenzbereiche eine feste Verkleinerungsoperation ausführt.

2. Gerät nach Anspruch 1, wobei die Verkleinerungseinrichtung bei den niedrigeren Frequenzen eines der Frequenzbereiche eine adaptive Verkleinerungsoperation ausführt, und wobei die Werte mehrmals verkleinert werden und eine Zahl, die angibt, wie oft mal die Werte zu verkleinern sind, durch eine Feststellung von Werten bei einer von der Blockfrequenz-Analyseeinrichtung ausgeführten Blockfrequenzanalyse adaptiv bestimmt wird.

3. Gerät nach Anspruch 2, wobei die Verkleinerungseinrichtung außerdem aufweist:
eine Einrichtung zur Feststellung einer Signaltonalität zur Bereitstellung einer Größe der Signaltonalität, und
eine Einrichtung zum adaptiven Bestimmen der Zahl, die angibt, wie oft mal die Werte zu verkleinern sind, in Abhängigkeit von der Größe der Signaltonalität.

4. Gerät nach Anspruch 1, 2 oder 3, wobei
die Blockfrequenz-Analyseeinrichtung eine Einrichtung zur Anwendung eines Blockgleitens auf die Ausgangssignale in den jeweiligen Frequenzbereichen der Nichtblockfrequenz-Analyseeinrichtung aufweist, und wobei
das Blockgleiten von der von der Blockfrequenz-Analyseeinrichtung ausgeführten Blockfrequenzanalyse ausgelöst wird.

5. Gerät nach Anspruch 4, wobei die Verkleinerungseinrichtung die Werte bei der Blockfrequenz-Analyseeinrichtung zum Auslösen des Blockgleitens wiederholt verkleinert.

6. Gerät nach Anspruch 5, wobei
die Blockgleiteinrichtung ein durch eine Blockgleitgröße definiertes Blockgleiten anwendet, und die Verkleinerungseinrichtung die Werte bei der von der Blockfrequenz-Analyseeinrichtung ausgeführten Blockfrequenzanalyse eine Zahl mal wiederholt verkleinert, die zum Auslösen des Blockgleitens mit der Blockgleitgröße korrespondiert.

7. Gerät zur Dekodierung eines kodierten Signals, wobei das kodierte Signal zur Erzeugung eines digitalen Ausgangssignals dekodiert wird, das kodierte Signal durch Ausführen einer Nichtblockfrequenzanalyse (101, 102) eines digitalen Eingangssignals zur Erzeugung eines Frequenzbereichssignals in jedem von mehreren Frequenzbereichen erhalten wird, jedes Frequenzbereichsignal in Blöcke geteilt und bei jedem Block des Frequenzbereichssignals in jedem der Frequenzbereiche eine Blockfrequenzanalyse (123 - 125) ausgeführt wird, um frequenzanalysierte Signale bereitzustellen, und die block-frequenznalysierten Signale quantisiert (130) werden, um einen Block des kodierten Signals zu erzeugen, wobei das Gerät aufweist:
eine Inversquantisierungseinrichtung (230) zur Entquantisierung der quantisierten blockfrequenzanalysierten Signale,
eine Blockfrequenz-Syntheseeinrichtung (223, 224, 225) zur Ausführung einer Blockfrequenzsynthese zum Transformieren der entquantisierten blockfrequenzanalysierten Signale in jedem der Frequenzbereiche in jedem Block des kodierten Signals vom Frequenzbereich in den Zeitbereich, wobei die Blockfrequenz-Syntheseeinrichtung in jedem der Frequenzbereiche einen Block eines wiedergegebenen Frequenzbereichssignals bereitstellt, und
eine Nichtblockfrequenz-Syntheseeinrichtung (201, 202) zur Ausführung einer Frequenzsynthese des wiedergegebenen Frequenzbereichssignals aus der Nichtblockfrequenz-Syntheseeinrichtung zur Bereitstellung des digitalen Ausgangssignals,
**dadurch gekennzeichnet, dass**
die Blockfrequenz-Syntheseeinrichtung außerdem aufweist:
eine Verkleinerungseinrichtung, die derart betreibbar ist, dass sie an den Werten bei der Blockfrequenzsynthese bei einer niedrigeren Frequenz eines der Frequenzbereiche eine adaptiv gesteuerte Verkleinerungsoperation ausführt und an den Werten bei der Blockfrequenzsynthese bei einer höheren Frequenz eines der Frequenzbereiche eine feste Verkleinerungsoperation ausführt.

8. Gerät nach Anspruch 7, wobei die Verkleinerungseinrichtung
bei den niedrigeren Frequenzen eines der Frequenzbereiche eine adaptive Verkleinerungsoperation ausführt, wobei die Werte mehrmals verkleinert werden und eine Zahl, die angibt, wie oft mal die Werte zu verkleinern sind, durch eine Feststellung von Werten bei der von der Blockfrequenz-Syntheseeinrichtung ausgeführten Blockfrequenzsynthese adaptiv bestimmt wird.

9. Gerät nach Anspruch 8, wobei die Verkleinerungseinrichtung außerdem aufweist:
eine Einrichtung zur Feststellung einer Signaltonalität zur Bereitstellung einer Größe der Signaltonalität, und
eine Einrichtung zur adaptiven Bestimmung der Zahl, die angibt, wie oft mal die Werte zu verkleinern sind, in Abhängigkeit von der Größe der Signaltonalität.

10. Gerät nach Anspruch 7, 8 oder 9, wobei
die Blockfrequenz-Syntheseeinrichtung eine Einrichtung zur Anwendung eines Blockgleitens auf die Ausgangssignale in den jeweiligen Frequenzbereichen der Nichtblockfrequenz-Syntheseinrichtung aufweist, und wobei
das Blockgleiten von der von der Blockfrequenz-Syntheseeinrichtung ausgeführten Blockfrequenzanalyse ausgelöst wird.

11. Gerät nach Anspruch 10, wobei die Verkleinerungseinrichtung die Werte bei der Blockfrequenz-Syntheseeinrichtung zum Auslösen des Blockgleitens wiederholt verkleinert.

12. Gerät nach Anspruch 11, wobei
die Blockgleiteinrichtung ein durch eine Blockgleitgröße definiertes Blockgleiten anwendet, und
die Verkleinerungseinrichtung die Werte bei der von der Blockfrequenz-Syntheseeinrichtung ausgeführten Blockfrequenzsynthese eine Zahl mal wiederholt verkleinert, die zum Auslösen des Blockgleitens mit der Blockgleitgröße korrespondiert.

13. Digitalsignalverarbeitungssystem mit einem Kodierungsgerät nach einem der Ansprüche 1 bis 6 und einem Dekodierungsgerät nach einem der Ansprüche 7 bis 12.

## Revendications

1. Un appareil pour coder un signal d'entrée numérique pour produire un signal codé, l'appareil comprenant :
des moyens d'analyse de fréquence ne portant pas sur des blocs (101, 102) pour accomplir une analyse de fréquence du signal d'entrée numérique de façon à fournir un signal de gamme de fréquence dans chacune de plusieurs gammes de fréquence ;
des moyens d'analyse de fréquence par bloc (123, 124, 125) pour accomplir une analyse de fréquence par bloc sur les signaux de gamme de fréquence qui sont produits par les moyens d'analyse de fréquence ne portant pas sur des blocs ;
des moyens (130) pour quantifier les signaux ayant subi l'analyse de fréquence par bloc, qui sont produits par les moyens d'analyse de fréquence par bloc ;
**caractérisé en ce que**
les moyens d'analyse de fréquence par bloc comprennent en outre :
des moyens de réduction de valeur, ces moyens de réduction de valeur pouvant être actionnés pour accomplir une opération de réduction de valeur commandée de façon adaptative sur les valeurs dans l'analyse de fréquence par bloc dans une gamme de fréquence inférieure parmi les gammes de fréquence, et pour accomplir une opération de réduction de valeur fixe sur les valeurs dans l'analyse de fréquence par bloc, dans une gamme de fréquence supérieure parmi les gammes de fréquence.

2. L'appareil de la revendication 1, dans lequel les moyens de réduction de valeur dans la gamme de fréquence inférieure parmi les gammes de fréquence, effectuent une opération de réduction de valeur adaptative, et dans lequel les valeurs sont réduites un nombre de fois déterminé de façon adaptative par une évaluation de valeurs dans l'analyse de fréquence par bloc effectuée par les moyens d'analyse de fréquence par bloc.

3. L'appareil de la revendication 2, dans lequel les moyens de réduction de valeur comprennent en outre :
des moyens pour juger une tonalité de signal de façon à fournir une grandeur de la tonalité de signal,
des moyens pour déterminer de façon adaptative, en réponse à la grandeur de la tonalité de signal, le nombre de fois que les valeurs doivent être réduites.

4. L'appareil de la revendication 1, 2 ou 3, dans lequel :
les moyens d'analyse de fréquence par bloc comprennent des moyens pour appliquer un flottement de bloc aux signaux de sortie dans les gammes de fréquence respectives des moyens d'analyse de fréquence ne portant pas sur des blocs, et
le flottement de bloc est supprimé par l'analyse de fréquence par bloc effectuée par les moyens d'analyse de fréquence par bloc.

5. L'appareil de la revendication 4, dans lequel les moyens de réduction de valeur réduisent de façon répétée les valeurs dans les moyens d'analyse de fréquence par bloc pour supprimer le flottement de bloc.

6. L'appareil de la revendication 5, dans lequel :
les moyens de flottement de bloc appliquent un flottement de bloc défini par une grandeur de flottement de bloc ;
les moyens de réduction de valeur réduisent de façon répétée les valeurs dans l'analyse de fréquence par bloc effectuée par les moyens d'analyse de fréquence par bloc, un nombre de fois correspondant à la grandeur de flottement de bloc, pour supprimer le flottement de bloc.

7. Appareil pour décoder un signal codé, dans lequel le signal codé est décodé pour fournir un signal de sortie numérique, le signal codé étant obtenu en effectuant une analyse de fréquence ne portant pas sur des blocs (101, 102) d'un signal d'entrée numérique, pour fournir un signal de gamme de fréquence dans chacune de plusieurs gammes de fréquence, en divisant en blocs chaque signal de gamme de fréquence et en accomplissant, sur chaque bloc du signal de gamme de fréquence dans chacune des gammes de fréquence, une analyse de fréquence par bloc (123-125) pour produire des signaux ayant subi une analyse de fréquence, et en quantifiant (130) les signaux ayant subi l'analyse de fréquence par bloc, pour produire un bloc du signal codé, l'appareil comprenant :
des moyens de quantification inverse (230) pour déquantifier les signaux soumis à l'analyse de fréquence par bloc et quantifiés,
des moyens de synthèse de fréquence par bloc (223, 224, 225) pour effectuer une synthèse de fréquence par bloc pour transformer, du domaine des fréquences au domaine des temps, des signaux soumis à l'analyse de fréquence par bloc et déquantifiés, dans chacune des gammes de fréquence dans chaque bloc du signal codé, les moyens de synthèse de fréquence par bloc produisant, dans chacune des gammes de fréquence, un bloc de signal de gamme de fréquence reproduit ;
des moyens de synthèse de fréquence ne portant pas sur des blocs (201, 202) pour effectuer une synthèse de fréquence des signaux de gamme de fréquence reproduits, provenant des moyens de synthèse de fréquence ne portant pas sur des blocs, pour produire le signal de sortie numérique,
**caractérisé en ce que**
les moyens de synthèse de fréquence par bloc comprennent en outre :
des moyens de réduction de valeur, les moyens de réduction de valeur pouvant être actionnés pour accomplir une opération de réduction de valeur commandée de façon adaptative sur les valeurs dans la synthèse de fréquence par bloc, dans une gamme de fréquence inférieure parmi les gammes de fréquence, et pour accomplir une opération de réduction de valeur fixe sur les valeurs dans la synthèse de fréquence par bloc, dans une gamme de fréquence supérieure parmi les gammes de fréquence.

8. L'appareil de la revendication 7, dans lequel les moyens de réduction de valeur:
dans la gamme de fréquence inférieure parmi les gammes de fréquence, effectuent une opération de réduction de valeur adaptative dans laquelle les valeurs sont réduites un nombre de fois déterminé de façon adaptative par un jugement de valeurs dans la synthèse de fréquence par bloc qui est effectuée par les moyens de synthèse de fréquence par bloc.

9. L'appareil de la revendication 8, dans lequel les moyens de réduction de valeur comprennent en outre :
des moyens pour juger une tonalité de signal pour produire une grandeur de la tonalité de signal,
des moyens pour déterminer de façon adaptative, en réponse à la grandeur de la tonalité de signal, le nombre de fois que les valeurs doivent être réduites.

10. L'appareil de la revendication 7, 8 ou 9, dans lequel :
les moyens de synthèse de fréquence par bloc comprennent des moyens pour appliquer un flottement de bloc aux signaux de sortie dans les gammes de fréquence respectives des moyens de synthèse de fréquence ne portant pas sur des blocs, et
le flottement de bloc est supprimé par la synthèse de fréquence par bloc qui est effectuée par les moyens de synthèse de fréquence par bloc.

11. L'appareil de la revendication 10, dans lequel les moyens de réduction de valeur réduisent de façon répétée les valeurs dans la synthèse de fréquence par bloc qui est effectuée par les moyens de synthèse de fréquence par bloc, pour supprimer le flottement de bloc.

12. L'appareil de la revendication 11, dans lequel :
les moyens de flottement de bloc appliquent un flottement de bloc défini par une grandeur de flottement de bloc ; et
les moyens de réduction de valeur réduisent de façon répétée les valeurs dans la synthèse de fréquence par bloc qui est effectuée par les moyens de synthèse de fréquence par bloc, un nombre de fois correspondant à la grandeur de flottement de bloc, pour supprimer le flottement de bloc.

13. Un système de traitement de signal numérique comprenant un appareil de codage selon l'une quelconque des revendications 1 à 6, et un appareil de décodage selon l'une quelconque des revendications 7 à 12.
